(19) Europäisches Patentamt
European Patent Office
Office européen des brevets

(11) **EP 4 787 846 A2**

(12) **EUROPEAN PATENT APPLICATION**

(43) Date of publication:
**05.08.2026 Bulletin 2026/32**

(21) Application number: **26186791.5**

(22) Date of filing: **22.12.2020**

(51) International Patent Classification (IPC):
***H04N 19/176*** (2014.01)

(52) Cooperative Patent Classification (CPC):
**H04N 19/147; H04N 19/11; H04N 19/176;
H04N 19/593; H04N 19/88**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.01.2020 US 202062956813 P**

(62) Document number(s) of the earlier application(s) in
accordance with Art. 76 EPC:
**20910546.9 / 4 085 621**

(71) Applicant: **INTEL Corporation
Santa Clara, CA 95054 (US)**

(72) Inventors:
• **SUNDARAM, Vijay
Sunnyvale, CA 94085 (US)**
• **CHIU, Yi-Jen
San Jose, CA 95129 (US)**

(74) Representative: **HGF
HGF Limited
4th Floor, 1 City Square
Leeds LS1 2ES (GB)**

Remarks:
This application was filed on 22-06-2026 as a
divisional application to the application mentioned
under INID code 62.

(54) **VIDEO CODING WITH MULTIPLE INTRA BLOCK COPY MODES**

(57) Example methods, apparatus, systems and articles of manufacture (e.g., physical storage media) to implement video coding with multiple intra block copy modes are disclosed. Example video encoder apparatus disclosed herein include a coding block translator to perform a translation operation on a coding block of an image frame to determine a translated version of the coding block. Disclosed example video encoder apparatus also include a searcher to perform a first intra block copy search based on an untranslated version of the coding block and a second intra block copy search based on the translated version of the coding block to determine a candidate predictor block of previously encoded pixels of the image frame, the candidate predictor block corresponding to an intra block copy predictor of the coding block

FIG. 1

**Description**

RELATED APPLICATION(S)

This patent claims the benefit of U.S. Provisional Application No. 62/956,813, which is titled "ENHANCED INTRA BLOCK COPY MODES FOR IMPROVED SCREEN CONTENT COMPRESSION," and which was filed on January 3, 2020. Priority to U.S. Provisional Application No. 62/956,813 is claimed. U.S. Provisional Application No. 62/956,813 is hereby incorporated by reference in its entirety.

FIELD OF THE DISCLOSURE

This disclosure relates generally to video coding and, more particularly, to video coding with multiple intra block copy modes.

BACKGROUND

Video streams may be compressed by performing spatial (intra picture) prediction and/or temporal (inter picture) prediction to reduce and/or remove redundancy in a sequence of image frames included in the video stream. Video compression may be performed according to one or more video coding industry standards, as well as extensions of such standards tailored to support particular types of video content, such as screen content generated by a media device. Media devices may transmit, receive, encode, decode, and/or store digital video information efficiently by implementing such video compression.

BRIEF DESCRIPTION OF THE DRAWINGS

FIG. 1 is a block diagram of an example video encoder to implement video coding with multiple intra block copy modes in accordance with teachings of this disclosure.

FIG. 2 illustrates an example partition unit that may correspond to an example coding block and/or an example predictor block processed by the video encoder of FIG. 1.

FIGS. 3-4 illustrate example intra block copy modes implemented by the video encoder of FIG. 1.

FIGS. 5-19 illustrate example translation operations performed by the video encoder of FIG. 1 on an example coding block and/or an example predictor block to implement the example intra block copy modes of FIGS. 3-4.

FIG. 20 illustrates an example intra block copy procedure performed by the video encoder of FIG. 1.

FIG. 21 is a block diagram of an example intra block copy encoder that may be used to implement the video encoder of FIG. 1.

FIG. 22 is a block diagram of an example intra block copy decoder that may be used to decode an encoded video bitstream output from the video encoder of FIG. 1

FIG. 23 is a flowchart representative of example computer readable instructions that may be executed to implement the video encoder and/or the intra block copy encoder of FIGS. 1 and/or 21.

FIG. 24 is a flowchart representative of example computer readable instructions that may be executed to implement the intra block copy decoder of FIG. 22.

FIG. 25 is a flowchart representative of example computer readable instructions that may be executed to implement the video encoder of FIG. 1.

FIG. 26 is a block diagram of an example processor platform structured to execute the example computer readable instructions of FIGS. 23 and/or 25 to implement the video encoder of FIG. 1 and/or the intra block copy encoder of FIGS. 1 and/or 21.

FIG. 27 is a block diagram of an example processor platform structured to execute the example computer readable instructions of FIG. 24 to implement the video decoder of FIG. 22.

FIG. 28 is a block diagram of an example electronic device structured to implement multiple intra block copy modes in accordance with teachings of this disclosure to perform screen content compression.

FIG. 29 is a block diagram of an example computer readable medium including logic to implement multiple intra block copy modes in accordance with teachings of this disclosure to perform screen content compression.

FIG. 30 is a block diagram of an example software distribution platform to distribute software (e.g., software corresponding to the example computer readable instructions of FIGS. 23, 24 and/or 25) to client devices such as consumers (e.g., for license, sale and/or use), retailers (e.g., for sale, re-sale, license, and/or sub-license), and/or original equipment manufacturers (OEMs) (e.g., for inclusion in products to be distributed to, for example, retailers and/or to direct buy customers).

FIG. 31 is a graph illustrating example performance results for video coding with multiple intra block copy modes implemented in accordance with teachings of this disclosure.

The figures are not to scale. Instead, the thickness of the layers or regions may be enlarged in the drawings. In general, the same reference numbers will be used throughout the drawing(s) and accompanying written description to refer to the same or like parts, elements, etc. Connection references (e.g., attached, coupled, connected, joined, etc.) are to be construed broadly and may include intermediate members between a collection of elements and/or relative movement between elements unless otherwise indicated. As such, connection references do not necessarily infer that two elements are directly connected and in fixed relation to each other.

Descriptors "first," "second," "third," etc., are used herein when identifying multiple elements or components which may be referred to separately. Unless otherwise specified or understood based on their context of use, such descriptors are not intended to impute any meaning of priority, physical order or arrangement in a list, or ordering in time but are merely used as labels for referring to multiple elements or components separately for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for ease of referencing multiple elements or components.

DETAILED DESCRIPTION

Example methods, apparatus, systems and articles of manufacture (e.g., physical storage media) to implement video coding with multiple intra block copy modes are disclosed herein. A video stream may be compressed according to one or more video coding industry standards, and/or or the characteristics of the stream may be changed, to reduce a size and/or bandwidth associated with the video stream. Characteristics of the video stream that may be changed include, but are not limited to, the resolution and the bit rate of the video stream. Video encoding may also be used when preparing the video stream for transmission between computing devices or/or components of computing devices. Video encoding industry standards include Advanced Video Coding (AVC) standards, High Efficiency Video Coding (HEVC) video encoding standards, etc.

For example, the High Efficiency Video Coding (HEVC/H.265) was recently established by the ISO/IEC Moving Picture Experts Group and ITU-T Video Coding Experts Group to achieve bit-rate reduction over H.264/AVC. Subsequently, a Screen Content Coding (SCC) extension of HEVC was created to enable improved compression performance for videos containing still graphics, text and animation, also referred to as screen content. Screen content generally refers to digitally generated pixels present in video. Pixels generated digitally, in contrast with pixels captured by an imager or camera, may have different properties not considered by earlier AVC and HEVC standard. The ITU-T version of the HEVC standard that added SCC extensions, published in March 2017, addresses at least some of those gaps in the earlier standards. One feature of the SCC extension is the Intra Block Copy (IBC) feature.

Example solutions disclosed herein improve the existing standardized IBC feature by implementing one or more additional IBC modes of prediction, with a goal of improving screen content coding performance. Intra Block Copy (IBC) is a coding tool introduced in the SCC extension of HEVC as a coding mode in addition to the conventional intra and inter prediction modes. IBC is similar to inter prediction, but with the difference being that when a coding block (also referred to as a coding unit) is coded in IBC mode, the candidate predictor block (also referred to as a predictor unit) of the coding block is selected from reconstructed blocks within the same image frame (same picture). As a result, IBC can be considered as "motion compensation" within the current frame/picture.

Example solutions for video coding with multiple intra block copy modes disclosed herein improve the compression of screen content by providing other IBC modes of prediction in addition to the conventional IBC mode. The conventional IBC mode identifies a candidate predictor block, and associated displacement vector (e.g., motion vector) identifying the location of the predictor block relative to the current coding block, in the spatial neighborhood of previously encoded blocks in the current frame. In examples disclosed herein, IBC is extended to include additional IBC modes, such as four different mirror translation modes and three different rotation translation modes, disclosed in further detail below. In some examples, such translation modes can be performed for some or all support coding block sizes (e.g., from 4x4 through 128x128 pixels) for square blocks, and some or all coding block shapes (e.g., square shapes, rectangular shapes, etc.). In some examples, video coding of screen content clips (e.g., webpage/text content, gaming content, etc.) with multiple IBC modes, as disclosed herein, exhibits average performance improvements (measured using Bjontegaard rate peak signal to noise ratio, BD-PSNR) from 0.8% to 2.63% over conventional IBC coding depending on the type of screen content.

Thus, example video coding techniques disclosed herein can improve the efficiency of screen content coding relative to other existing techniques. Also, some prior industry standards treat "macroblocks" as statically sized elements, while in newer tree recursive codecs, the encoder can evaluate when a pixel coding block should be split into finer coding blocks or made into larger coding blocks to, for example, yield a lowest bit cost with a highest visual quality. Also, some prior standards treated each macroblock with a uniform prediction type (such as inter or intra prediction types) and uniform transform size (such as 8x8 or 4x4), while high efficiency standards allow for mixing of prediction types and mixing of transform sizes, both based on an encoder decision process. By contrast, the coding blocks capable of being processed by video coding techniques disclosed herein can be dynamically sized and may include any combination of different IBC mode types, such as mirror and/or rotation modes, which are disclosed in further detail below. Such flexibility can further improve the efficiency of screen content coding relative to other existing video coding techniques.

These and other example methods, apparatus, systems and articles of manufacture (e.g., physical storage media) to implement video coding with multiple intra block copy modes are disclosed in further detail below.

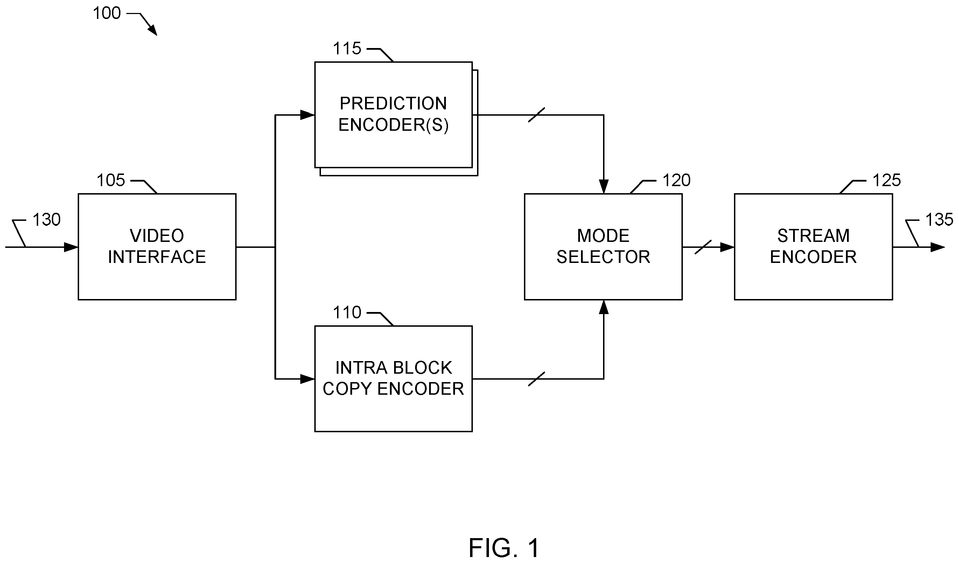

Turning to the figures, a block diagram of an example video encoder 100 to implement video coding with multiple intra block copy modes in accordance with teachings of this disclosure is illustrated in FIG. 1. The video encoder 100 of the illustrated example includes an example video interface 105, an example intra block copy encoder 110, one or more example prediction encoders 115, an example mode selector 120 and an example stream encoder 125. The video interface 105 is structured to accept an example, uncompressed input video stream 130. For example, the uncompressed input video stream 130 can correspond to an output video stream of a camera and/or other imaging device, a computer-generated video stream (e.g., such as a video stream corresponding to a video game, a computer generated graphics stream, etc.) generated by a computing device (e.g., such as a media device, video game console, computer, server, mobile phone, etc.), and/or any combination thereof. In the illustrated, the video interface 105 segments the input video stream 130 into sequence of image frames (e.g., pictures) to be encoded by the intra block copy encoder 110 and/or the prediction encoder(s) 115.

The intra block copy encoder 110 of the illustrated example implements video encoding with multiple intra block copy modes in accordance with teachings of this disclosure. In some examples, the prediction encoder(s) 115 correspond to one or more of an intra prediction encoder and an inter prediction encoder. Inter prediction is a form of video encoding that exploits redundancies across successive image frames of a video. Such inter frame redundancies can be associated with object motion across the successive image frames. In inter prediction encoding, for a current coding block (e.g., current coding block of pixels) of a current frame being encoded, the inter prediction encoder searches for predictor blocks (e.g., predictor blocks of pixels) that can be used to predict the current coding block from among the previously encoded frames preceding the current frame in the video. Once a candidate predictor block, which is also referred to as a candidate inter predictor block, is found (e.g., that satisfies one or more selection criteria), the inter prediction encoder determines a motion vector to represent the location of the candidate inter predictor block. The inter prediction encoder also determines a residual (e.g., difference) between the current coding block and the candidate inter predictor block. The motion vector and residual are used to encode the coding block. For example, the motion vector and residual can be encoded into the encoded video bitstream to represent the coding block. To decode the encoded block, an inter prediction decoder selects the appropriate predictor block from the previously decoded image frames based on the motion vector, and combines (e.g., adds) the predictor block with the residual to obtained the decoded coding block.

In contrast with inter prediction, intra prediction is a form of video encoding that exploits redundancies within a given image frame of a video. Such intra frame redundancies can be associated with similar texture characteristics exhibited over an area of an object, background, etc. In intra prediction encoding, for a current coding block (e.g., current coding block of pixels) of a current frame being encoded, the intra prediction encoder searches for predictor blocks (e.g., predictor blocks of pixels) that can be used to predict the current coding block from among the pixels of previously encoded coding blocks of the current frame. In some examples, the pixels of previously encoded coding blocks that are searched are limited to a specified set of directions from the coding block being encoded. The different permissible directions can be referred to as different intra prediction modes. In some examples, a predictor block associated with a given intra prediction mode is formed as a combination (e.g., a linear combination) of pixels selected based on that particular intra prediction mode. Once a candidate predictor block, which is also referred to as a candidate intra predictor block, is found (e.g., that satisfies one or more selection criteria), a residual (e.g., difference) between the current coding block and the candidate intra predictor block is determined to encode the coding block. The residual and associated intra prediction mode that yielded the selected predictor block can be encoded into the encoded video bitstream to represent the coding block. To decode the encoded block, an intra prediction decoder selects, based on the intra prediction mode, the appropriate predictor block from the previously decoded pixels of the current frame being decoded, and combines (e.g., adds) the predictor block with the residual to obtained the decoded coding block.

Intra block copy is a form of intra prediction used to encode coding blocks, such as coding units, partition units, etc. Intra block copy is targeted to screen content coding, and leverages the concept that for, a given portion of an image frame of a video containing computer generated screen content, there is a high probability that near that given portion of the image frame, that there will be another, previously encoded portion of that image containing similar image content that differs little if at all in terms of pixel texture. Thus, to transmit information about the given portion of the image (e.g., a coding block), it can be sufficient to transmit only a difference (e.g., residual) between the given portion (e.g., coding block) and the previously encoded similar portion (e.g., a predictor block). The process of finding similar areas among previously encoded images and/or content of the same image may be referred to as IBC searching or IBC prediction. A set of difference values that represent the difference between a given image portion (e.g., coding block) being encoded and a predictor region (e.g., predictor block) of previously encoded content is called a remainder or residual.

To encode a current coding block of an image using intra block copy, the IBC encoder 110 searches a search region of previously encoded pixels of the image to identify a predictor block. In some examples, the IBC encoder 110 limits its search for a predictor block to a same tile or same slice of the image frame that contains the current coding block being encoded. In some examples, the predictor block may be a block (e.g., array) of pixels that matches (e.g., based on one or more criteria, such as a coding cost, etc.) a block (e.g., array) of pixels included in the current coding block. In the illustrated example, the IBC encoder 110 selects, based on one or more criteria, a candidate predictor block (e.g., best predictor block) from a group of predictor blocks found during the IBC search The IBC encoder 110 then generates a displacement vector representing a displacement between the current video block and the candidate predictor block, which identifies a location of the candidate predictor block relative to the current coding block. As such, and as noted above, IBC is similar to inter prediction, but with the difference being that when a coding block is coded in IBC mode, the candidate predictor block of the coding block is selected from previously encoded and reconstructed blocks within the same image frame (same picture). As a result, IBC can be considered as "motion compensation" within the current frame/picture.

In some examples, the IBC encoder 110 generates a residual (also referred to as an IBC residual) as a difference between the current coding block and the candidate predictor block (e.g., by subtracting the candidate predictor block from the current coding block). The displacement vector and residual can then be included in the encoded video bitstream to thereby encode the current coding block. As disclosed in further detail below, an IBC decoder may then extract the displacement vector and associated residual data from the encoded video bitstream, and use the displacement vector to identify the predictor block to decode the encoding coding block. The IBC decoder may sum corresponding samples (e.g., pixels) of the residual and predictor block to reconstruct and, thereby, decode the coding block from the predictor block.

Conventional IBC implementations identify a candidate predictor block for a current coding block, and an associated displacement vector (e.g., motion vector) identifying the location of the predictor block relative to the current coding block, in the spatial neighborhood of previously encoded blocks in the current frame. The IBC encoder 110 of the illustrated example extends IBC to support additional IBC modes, where conventional IBC is referred to as IBC mode 0. As disclosed in further detail below, the additional IBC modes implemented by the IBC encoder 110 correspond to different translations (also referred to as transformations) of the coding block relative to the predictor block. For example, the IBC encoder 110 of the illustrated example implements up to seven additional IBC modes, referred to as IBM modes 1 to 7, corresponding to a first set of translation modes that includes up to four different mirror translation modes, and a second set of translation modes that includes up to three different rotation translation modes. Further details concerning such translation modes are provided below. In some examples, the IBC encoder implements the different IBC modes (or IBC translation modes) for some or all support coding block sizes (e.g., from 4x4 through 128x128 pixels) for square coding blocks, and some or all coding block shapes (e.g., square shapes, rectangular shapes, etc.).

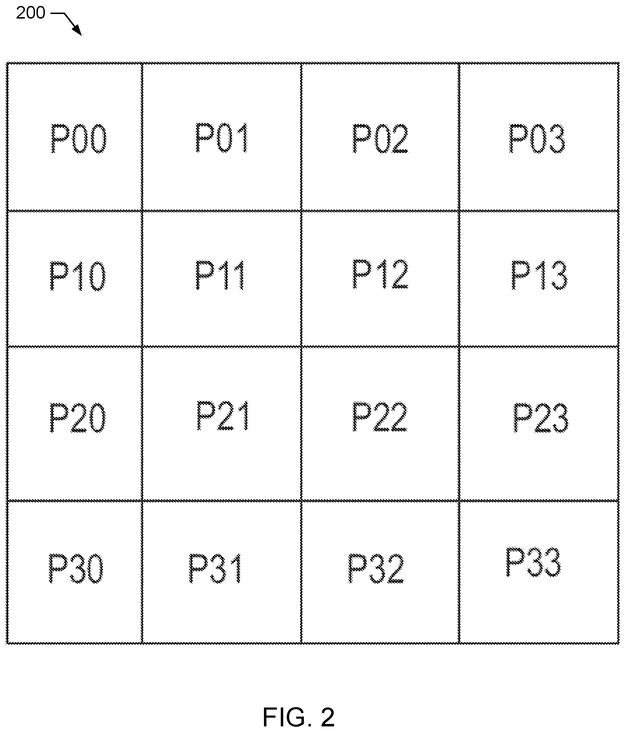

For example, FIG. 2 illustrates an example partition unit 200 that may be used by the IBC encoder 110 to select coding blocks and/or predictor blocks for processing. The partition unit 200 of the illustrated example has a 4x4 shape and, thus, corresponds to a square, 4x4 block of pixels. Mathematically, the pixels of the partition unit 200 can be represented by $p(i, j)$, where i ranges from 0 to 3 and j ranges from 0 to 3. Thus, $p(i, j)$ represents the pixel at the $i^{th}$ row position and $j^{th}$ column position of the partition unit 200.

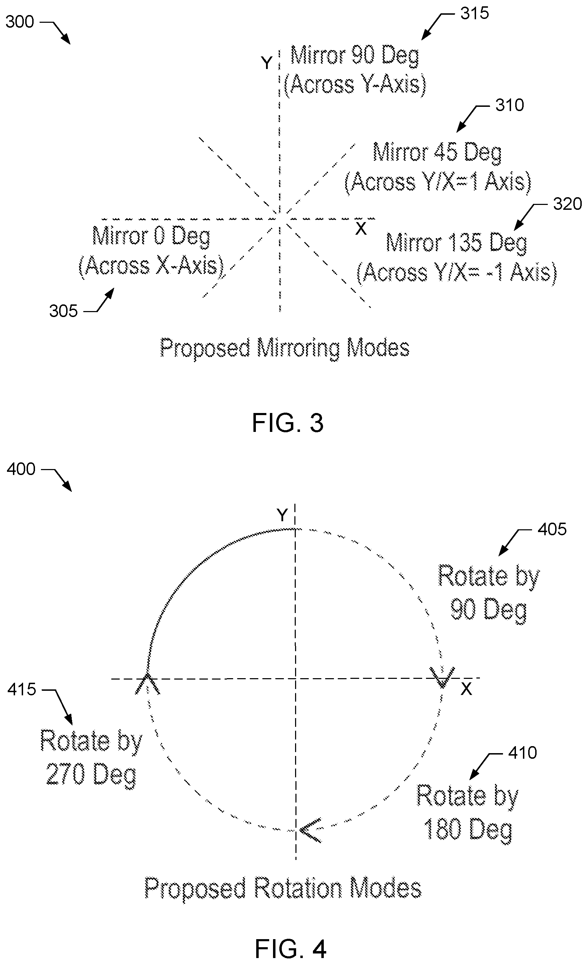

A first set of example IBC translation modes 300 that can be implemented by the IBC encoder 110 is illustrated in FIG. 3. The first set of IBC translation modes 300 includes example mirror translation modes 305, 310, 315 and 320. In the illustrated example, the mirror translation modes 305, 310, 315 and 320 are depicted relative to the X and Y axes being superimposed on the partition unit 200 such that the origin (X=Y=0) is at the center of the partition unit 200. As shown in the FIG. 3, the mirror translation mode 305 corresponds to a mirroring of the partition unit 200 across the X-axis (or, in other words, the Y=0 axis), which is also referred to as a 0-degree mirroring of the partition unit 200. In the illustrated example, the mirror translation mode 310 corresponds to a mirroring of the partition unit 200 across a line corresponding to Y/X = 1, which is also referred to as a 45-degree mirroring of the partition unit 200. In the illustrated example, the mirror translation mode 315 corresponds to a mirroring of the partition unit 200 across the Y-axis (or, in other words, the X=0 axis), which is also referred to as a 90-degree mirroring of the partition unit 200. In the illustrated example, the mirror translation mode 305 corresponds to a mirroring of the partition unit 200 across a line corresponding to Y/X = -1, which is also referred to as a 135-degree mirroring of the partition unit 200.

A second set of example IBC translation modes 400 that can be implemented by the IBC encoder 110 is illustrated in FIG. 4. The second set of IBC translation modes 400 includes example rotation translation modes 405, 410 and 415. In the illustrated example, the rotation translation modes 405, 410 and 415 are depicted relative to the X and Y axes being superimposed on the partition unit 200 such that the origin (X=Y=0) is at the center of the partition unit 200. As shown in the FIG. 4, the rotation translation mode 405 corresponds to 90-degree rotation of the partition unit 200. In the illustrated example, the rotation translation mode 410 corresponds to a 180-degree rotation of the partition unit 200. In the illustrated example, the rotation translation mode 415 corresponds to a 270-degree rotation of the partition unit 200.

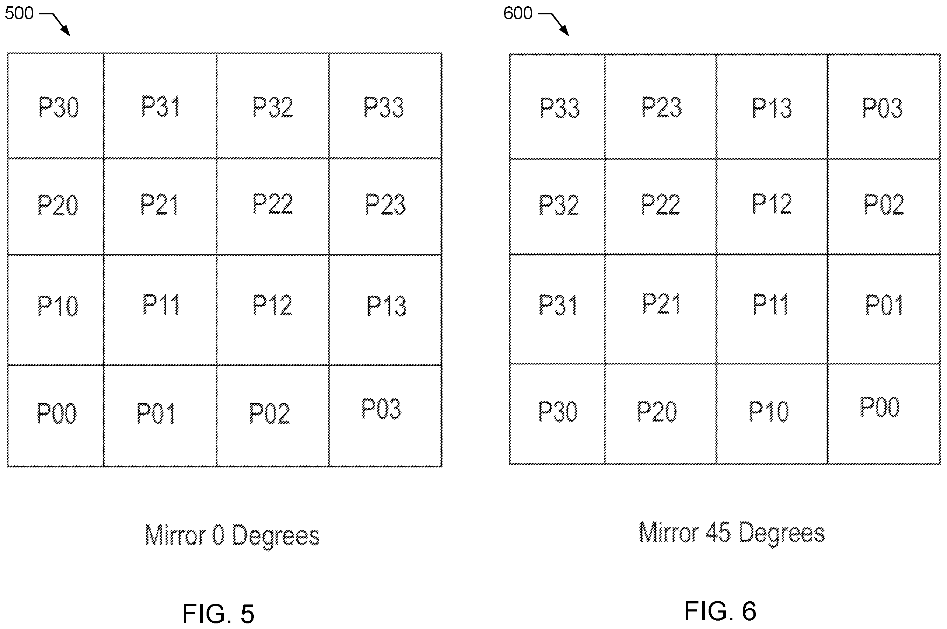

FIGS. 5-11 illustrate example results of transforming an example coding block according to the example IBC translation modes 305-320 and 405-415 disclosed above. In the illustrated example, the coding block has pixels selected according to the partition unit 200 of FIG. 2. Also, in the examples that follow, conventional IBC coding, in which the source, untransformed coding blocks are processed, is referred to interchangeably as IBC translation mode 0, IBC mode 0, or the default IBC mode, and corresponds to no translation being performed on the coding block being encoded.

With the foregoing in mind, FIG. 5 illustrates an example translated coding block 500 in which a coding block corresponding to the partition unit 200 is translated according to IBC mode 1 described above. As such, the translated coding block 500 is a translated version of the coding block corresponding to the partition unit 200 that has undergone a 0-degree mirroring operation, as described above. Using the mathematical notation described above in the context of FIG. 2, the IBC mode 1 pixels, $p_{IBC1}(i, j)$, included in the translated coding block 500 are related to the untranslated pixels, $p(i, j)$, of the source coding block according to Equation 1, which is:

$$p_{IBC1}(i, j) = p(3-i, j).$$

Equation 1

FIG. 6 illustrates an example translated coding block 600 in which an example coding block corresponding to the partition unit 200 is translated according to IBC mode 2 describe above. As such, the translated coding block 600 is a translated version of the coding block corresponding to the partition unit 200 that has undergone a 45-degree mirroring operation, as described above. Using the mathematical notation described above in the context of FIG. 2, the IBC mode 2 pixels, $p_{IBC2}(i, j)$, included in the translated coding block 600 are related to the untranslated pixels, $p(i, j)$, of the source coding block according to Equation 2, which is:

$$p_{IBC2}(i, j) = p(3-j, 3-i).$$

Equation 2

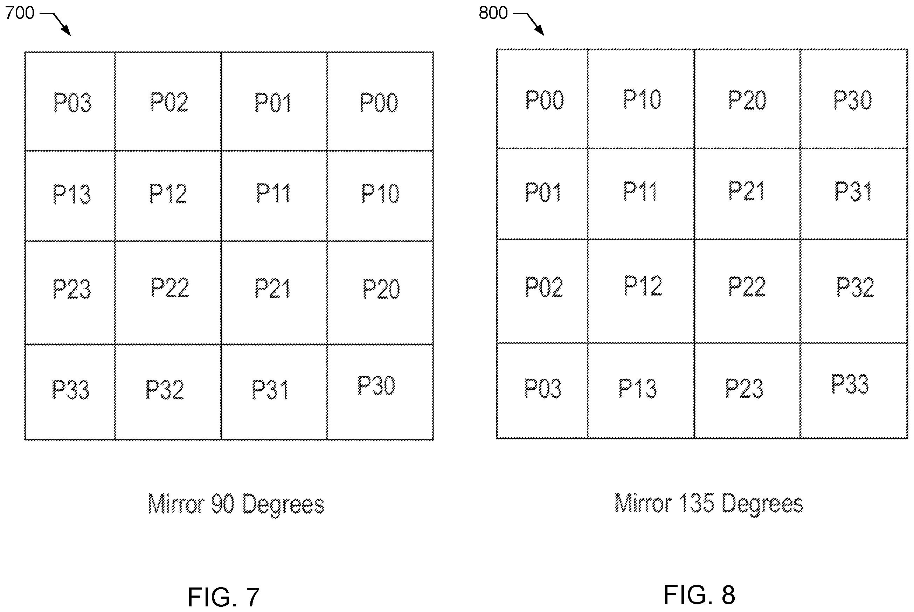

FIG. 7 illustrates an example translated coding block 700 in which an example coding block corresponding to the partition unit 200 is translated according to IBC mode 3 described above. As such, the translated coding block 700 is a translated version of the coding block corresponding to the partition unit 200 that has undergone a 90-degree mirroring operation, as described above. Using the mathematical notation described above in the context of FIG. 2, the IBC mode 3 pixels, $p_{IBC3}(i, j)$, included in the translated coding block 700 are related to the untranslated pixels, $p(i, j)$, of the source coding block according to Equation 3, which is:

$$p_{IBC3}(i, j) = p(i, 3-j).$$

Equation 3

FIG. 8 illustrates an example translated coding block 800 in which an example coding block corresponding to the partition unit 200 is translated according to IBC mode 4 described above. As such, the translated coding block 800 is a translated version of the coding block corresponding to the partition unit 200 that has undergone a 270-degree mirroring operation, as described above. Using the mathematical notation described above in the context of FIG. 2, the IBC mode 4 pixels, $p_{IBC4}(i, j)$, included in the translated coding block 800 are related to the untranslated pixels, $p(i, j)$, of the source coding block according to Equation 4, which is:

$$p_{IBC4}(i, j) = p(j, i).$$

Equation 4

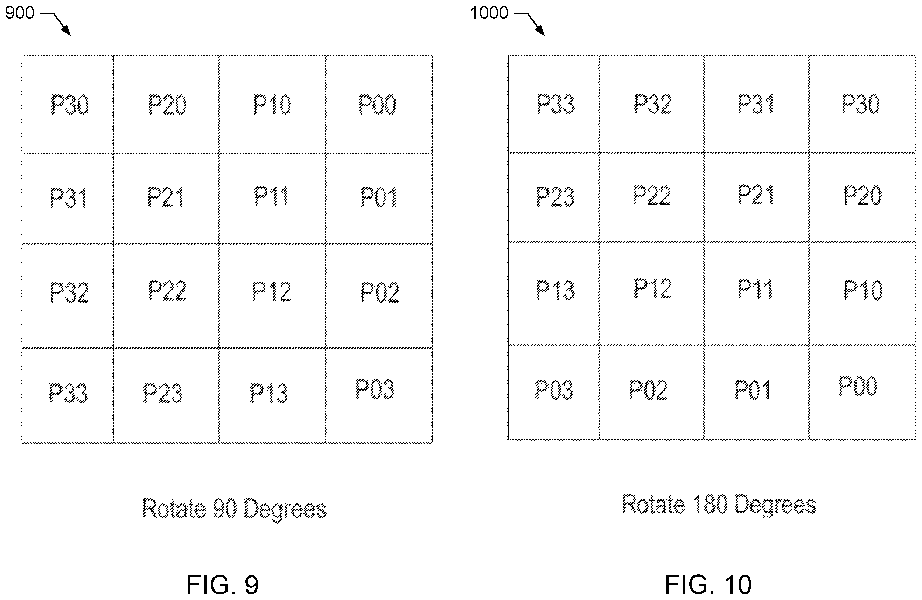

FIG. 9 illustrates an example translated coding block 900 in which an example coding block corresponding to the partition unit 200 is translated according to IBC mode 5 described above. As such, the translated coding block 900 is a translated version of the coding block corresponding to the partition unit 200 that has undergone a 90-degree rotation operation, as described above. Using the mathematical notation described above in the context of FIG. 2, the IBC mode 5 pixels, $p_{IBC5}(i, j)$, included in the translated coding block 900 are related to the untranslated pixels, $p(i, j)$, of the source coding block according to Equation 5, which is:

$$p_{IBC5}(i, j) = p(3-j, i).$$

Equation 5

FIG. 10 illustrates an example translated coding block 1000 in which an example coding block corresponding to the partition unit 200 is translated according to IBC mode 6 described above. As such, the translated coding block 1000 is a translated version of the coding block corresponding to the partition unit 200 that has undergone a 180-degree rotation operation, as described above. Using the mathematical notation described above in the context of FIG. 2, the IBC mode 6 pixels, $p_{IBC6}(i, j)$, included in the translated coding block 1000 are related to the untranslated pixels, $p(i, j)$, of the source coding block according to Equation 6, which is:

$$p_{IBC6}(i, j) = p(3-i, 3-j)$$

Equation 6

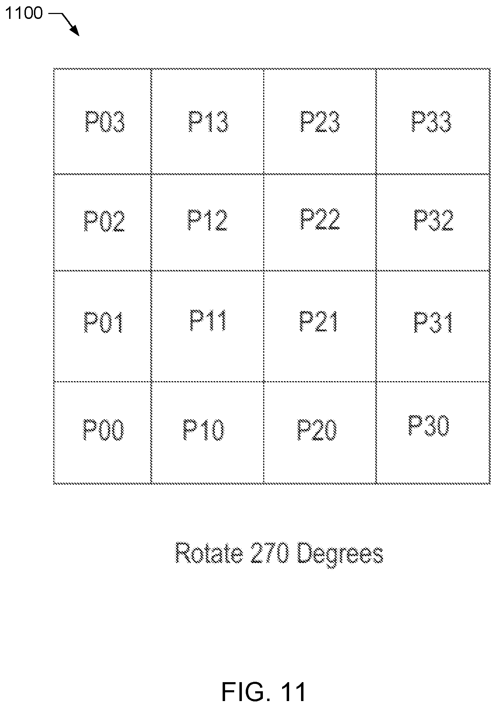

FIG. 11 illustrates an example translated coding block 1100 in which an example coding block corresponding to the partition unit 200 is translated according to IBC mode 7 described above. As such, the translated coding block 1100 is a translated version of the coding block corresponding to the partition unit 200 that has undergone a 270-degree rotation operation, as described above. Using the mathematical notation described above in the context of FIG. 2, the IBC mode 7 pixels, $p_{IBC7}(i, j)$, included in the translated coding block 1100 are related to the untranslated pixels, $p(i, j)$, of the source coding block according to Equation 7, which is:

$$p_{IBC7}(i, j) = p(j, 3-i).$$

Equation 7

The examples of FIGS. 5-11 illustrate the IBC translation modes 1 to 7 (also referred to as IBC+ modes 1 to 7 to distinguish them from the conventional IBC mode) being performed by the IBC encoder 110 on a 4x4 coding block. However, the IBC encoder 110 can perform the IBC translation modes 1 to 7 on other coding block sizes, such as square coding blocks from 4x4 through 128x128 pixels. Also, the IBC encoder 110 can perform the IBC translation modes 1 to 7 one coding blocks with other block shapes, such as rectangular block shapes. However, some IBC translation modes may result in a change in the shape of the translated coding block relative to the source coding block, which the IBC encoder 110 can account for as follows.

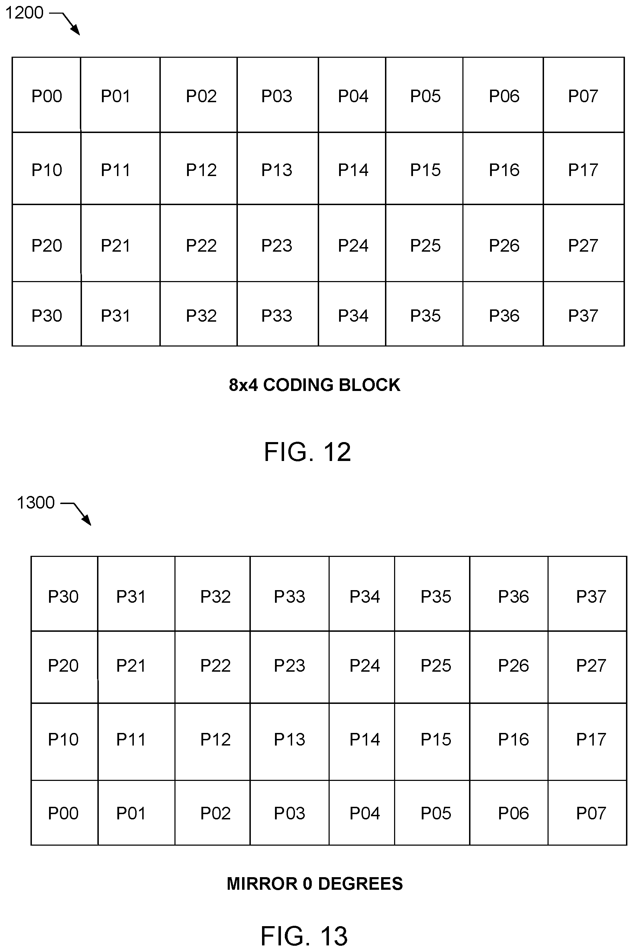

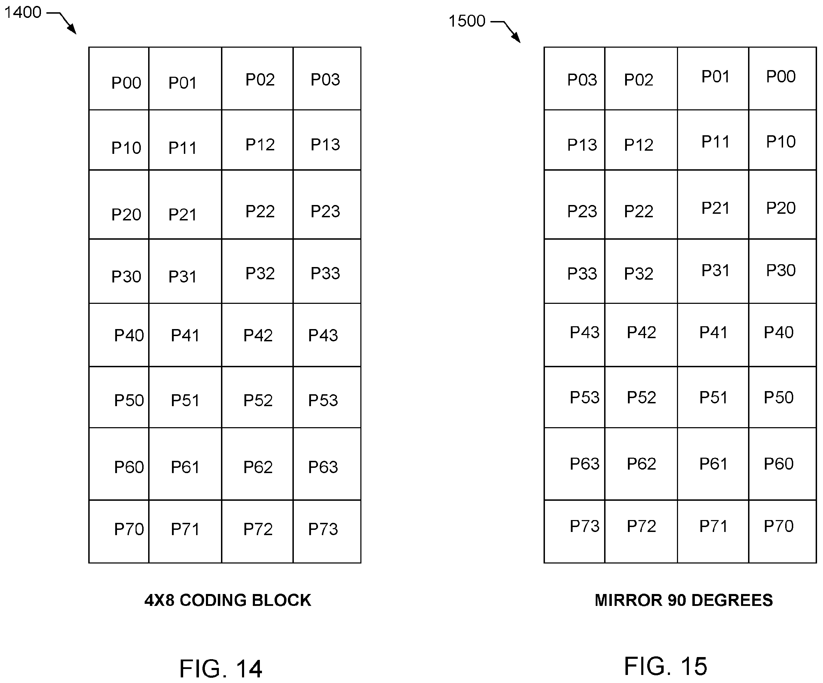

For example, the block translations performed according to IBC+ modes 1 to 7 translations are shape invariant for square coding blocks and, thus, maintain the original shape of the source coding block. Hence no additional handling is required for square coding blocks. Also, some of the IBC+ modes are shape invariant even for the non-square coding block shapes. For example, the IBC+ mode 1 (0-degree mirroring), IBC+ mode 3 (90-degree mirroring) and IBC+ mode 6 (180-degree rotation) translations do not change the original shape of the source coding block. For illustrative purposes, FIG. 12 illustrates an example rectangular 8x4 source coding block 1200. FIG. 13 illustrates an example translated coding block 1300, which corresponds to a translated version of the coding block 1200 that has undergone a 0-degree mirroring operation associated with IBC+ mode 1. Thus, the 0-degree mirroring operation associated with IBC+ mode 1 is shape invariant as the source coding block 1200 and the resulting translated coding block 1300 have the same shape. As another example, FIG. 14 illustrates an example rectangular 4x8 source coding block 1400. FIG. 15 illustrates an example translated coding block 1500, which corresponds to a translated version of the coding block 1400 that has undergone a 90-degree mirroring operation associated with IBC+ mode 3. Thus, the 90-degree mirroring operation associated with IBC+ mode 3 is shape invariant as the source coding block 1400 and the resulting translated coding block 1500 have the same shape.

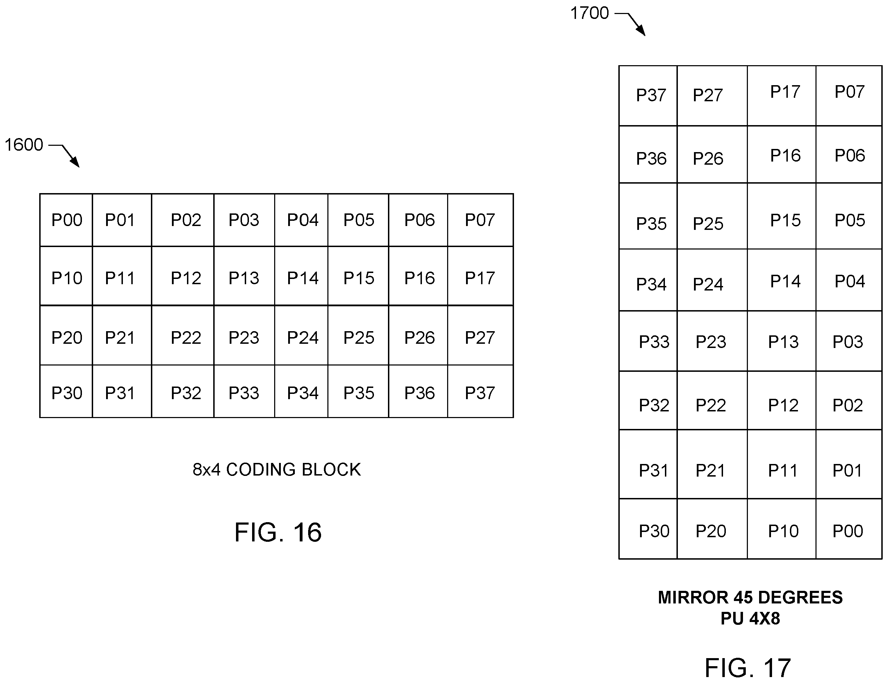

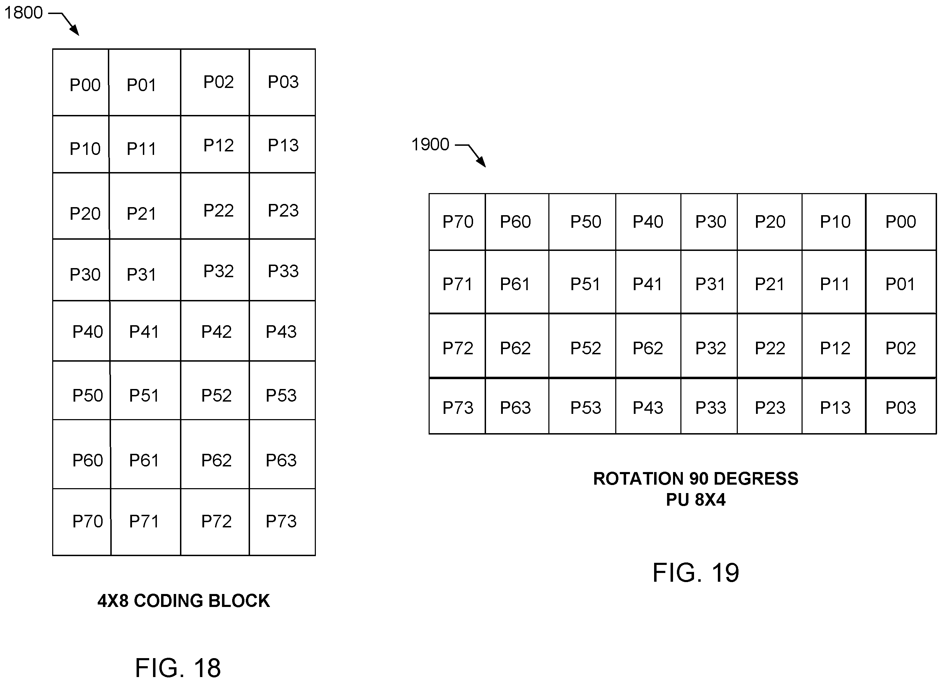

As mentioned above, some of the IBC+ modes are associated with block translations that are not shape invariant. For example, the IBC+ mode 2 (45-degree mirroring), IBC+ mode 4 (135-degree mirroring), IBC+ mode 5 (90-degree rotation) and IBC+ mode 7 (270-degree rotation) translations can change the original shape of the source coding block such that the width and height are interchanges between the source coding block and the resulting translated coding block. For illustrative purposes, FIG. 16 illustrates an example rectangular 8x4 source coding block 1600. FIG. 17 illustrates an example translated coding block 1700, which corresponds to a translated version of the coding block 1600 that has undergone a 45-degree mirroring operation associated with IBC+ mode 2. Thus, the 45-degree mirroring operation associated with IBC+ mode 2 is not shape invariant as the source coding block 1600 and the resulting translated coding block 1700 have different shapes (e.g., with the width and height interchanged in the illustrated example). As another example, FIG. 18 illustrates an example rectangular 4x8 source coding block 1800. FIG. 19 illustrates an example translated coding block 1900, which corresponds to a translated version of the coding block 1800 that has undergone a 90-degree rotation operation associated with IBC+ mode 5. Thus, the 90-degree rotation operation associated with IBC+ mode 5 is not shape invariant as the source coding block 1800 and the resulting translated coding block 1900 have different shapes (e.g., with the width and height interchanged in the illustrated example).

Returning to FIG. 2, the IBC encoder 110 of the illustrated example is configured to support IBC mode 0 and one or more of IBC+ modes 1 to 7. As described in further detail below, to encode a source coding block of an image frame, the IBC encoder 110 performs an IBC search according to conventional IBC mode 0 based on the source block. The IBC encoder 110 also performs one or more IBC searches based on the translated versions of the coding block according to the supported IBC+ modes. The IBC encoder 110 evaluates the respective predictor blocks identified for the IBC mode search and the supported IBC+ mode searches to select a final, candidate predictor block. For example, the IBC encoder 110 can select the candidate predictor block based on any one or more criteria that are defined to select a best/optimal predictor block from among the available identified predictor blocks.

Once the candidate predictor block is identified, the IBC encoder 110 generates a displacement vector (e.g., motion vector) to represent the location of the candidate predictor block relative to the source coding block in the image frame. For example, the IBC encoder 110 can generate the displacement vector as a difference between the top left pixel of the candidate predictor block and the top left pixel of the source coding block. Thus, even if the candidate predictor block corresponds to a translated version of the coding block, the IBC encoder 110 may still compute the displacement vector as a difference between the top left pixel of the candidate predictor block and the top left pixel of the source (untranslated) coding block. The IBC encoder 110 also outputs a value to indicate which of the IBC modes (e.g., IBC mode 0 or one of the supported IBC+ modes 1-7) yielded the candidate predictor block. As disclosed in further detail below, the displacement vector and winning IBC mode are coded into the encoded video bitstream to represent the encoded coding block.

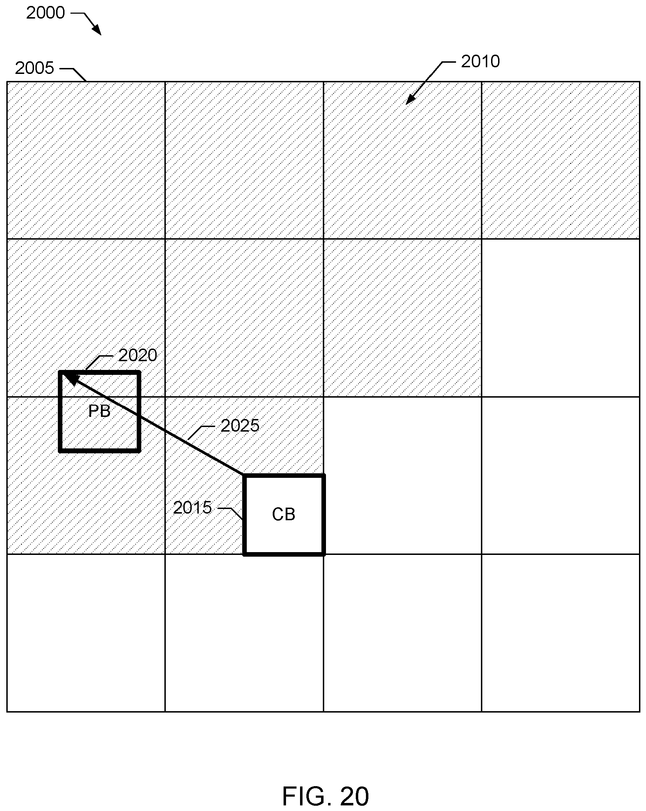

As mentioned above, the IBC encoder 110 performs an IBC search based on the source coding block (corresponding to IBC mode 0) and one more IBC searches based on translated version(s) of coding block (corresponding to one or more of IBC+ modes 1 to 7). An example IBC search 2000 performed by the IBC encoder 110 in an example image frame 2005 undergoing IBC coding is illustrated in FIG. 20. In the IBC search 2000 of the illustrated example, the IBC encoder 110 searches for predictor blocks in an example search region 2010 of the image frame 2005 associated with pixels that have already been encoded (e.g., containing previously encoded pixels of the image frame 2005). The search region 2010 assumes pixel blocks are encoded in raster order. In the illustrated example of FIG. 20, the IBC encoder 110 compares an example coding block 2015, which is being encoded, to predictor blocks, such as an example predictor block 2020, selected in the search region 2010. When performing coding according to IBC mode 0, the IBC encoder 110 compares the untranslated coding block 2015 to the predictor block 2020. When performing coding according to one of the IBC+ modes, the IBC encoder 110 compares translated version of the coding block 2015 (which is translated according to the given IBC+ mode) to the predictor block 2020. In some examples, when performing coding according to one of the IBC+ modes, the IBC encoder 110 could alternatively translate the predictor block 2020 instead of the coding block 2015. However, such an implementation could incur a substantial performance penalty as every predictor block selected in the search region 2010 would need to be translated according to that IBC+ mode. In contrast, when performing coding according to one of the IBC+ modes, the IBC encoder 110 is able to translate the coding block just once according to that IBC+ mode and compare the translated coding block to the untranslated predictor blocks selected in the search region 2010.

In the illustrated example of FIG. 20, for each IBC search 2000 that is performed (e.g., the IBC search for IBC mode 0 and the IBC search(es) for one or more of IBC+ modes 1 to 7), the IBC encoder 110 selects (e.g., based on one or more criteria) an intermediate predictor block corresponding to that IBC search. Then, the IBC encoder 110 selects (e.g., based on one or more criteria) a final, candidate predictor block from among the intermediate predictor blocks associated with the different supported IBC/IBC+ modes. In the illustrated example of FIG. 20, assuming the predictor block 2020 is the candidate predictor block ultimately selected for the coding block 2015, the IBC encoder 110 determines an example displacement vector 2025 to represent the location of the candidate predictor block 2020 relative to the source coding block 2015 in the image frame 2005. For example, the IBC encoder 110 can compute the displacement vector 2025 as a difference between the top left pixel of the candidate predictor block 2020 and the top left pixel of the source coding block 2015. As noted above, even if the candidate predictor block 2020 corresponds to a translated version of the coding block 2015, the IBC encoder 110 still computes the displacement vector 2025 as a difference between the top left pixel of the candidate predictor block 2020 and the top left pixel of the source (untranslated) coding block 2015. The IBC encoder 110 also outputs a value to indicate which of the IBC modes (e.g., IBC mode 0 or one of the supported IBC+ modes 1-7) yielded the candidate predictor block 2020. As disclosed in further detail below, the displacement vector 2025 and winning IBC mode are coded into the encoded video bitstream to represent the encoded version of the coding block 2015.

In some examples, the IBC encoder 110 restricts the search of the search region 2010 such that the predictor block 2020 may not overlap the current coding block 2015. Additionally or alternatively, in some examples, the IBC encoder 110 restricts the search of the search region 2010 such that the predictor block 2020 is within the same slice and/or tile of the image frame 2005 as the coding block 2015. In some examples, the IBC encoder 110 limits the search window to be previously encoded blocks covering the top and left neighboring super blocks in the image frame 2005, to avoid affecting the parallel processing capability provided by wavefronts. In some examples, the IBC encoder 110 excludes, from the IBC search, a 256 pixel-wide area just before the current coding block 2015 being encoded. This results in the valid search region 2010 being restricted to already encoded and reconstructed blocks that are at least 256 pixels away (in a raster scan order) from the current block. In some examples, the IBC search 2000 implemented by the IBC encoder 110 is a combination of a classic diamond search followed by a hash search, where cyclic redundancy check (CRC) is used as a hash metric. In some example, the IBC encoder 110 performs the IBC search 2000 in full pel resolution as subpixel displacements are not allowed. The foregoing constraints also hold good for the proposed mirror and rotation modes disclosed above.

Returning to FIG. 2, for a given coding block undergoing encoding, the example IBC encoder 110 outputs the displacement vector for the candidate predictor block selected for that current coding block, and the IBC mode value indicating which of the IBC modes (e.g., IBC mode 0 or one of the supported IBC+ modes 1-7) yielded the candidate predictor block for that current coding block. As such, the candidate predictor block is also referred to as an intra block copy predictor of the coding block. In the illustrated example, the IBC encoder 110 outputs the displacement value and IBC mode value to the mode selector 120. In some examples, the IBC encoder 110 also outputs the candidate predictor block, and/or the residual determined using the candidate predictor block, to the mode selector 120. Additionally or alternatively, in some examples, the IBC encoder 110 also outputs one or more coding metrics (e.g., coding cost(s), coding score(s), etc.) for performing IBC coding using the selected candidate predictor block, and provides those metric(s) to the mode selector 120.

In the illustrated example, the other prediction encoder(s) 115 also output their respective results for coding the current coding block. In some examples, the IBC encoder 110 and the other prediction encoder(s) 115 each compute rate distortion (RD) performance values for encoding a given coding block according to their respective coding modes. For example, IBC encoder 110 may perform IBC encoding of a given coding block, then further transform and quantize the encoded coding block in preparation for inclusion in an output bitstream, and generate an RD performance value for the result, which incorporates the costs/penalties to include that resulting encoded block in the output bitstream. Likewise, the other prediction encoder(s) 115 can compute respective RD performance values for encoding the coding block according to their respective modes (e.g., inter, intra, etc.) The mode selector 120 compares the results provided by the IBC encoder 110 and the other prediction encoder(s) 115 for the current coding blocks to determine which encoding mode is to be used to encode the current coding block. For example, the mode selector 120 may select the encoding mode with the lowest RD value for the current coding block. Assuming IBC is the winning encoding mode, the mode selector provides the displacement vector, the IBC mode value that yielded the winning candidate predictor block, and the residual (if provided by the IBC encoder 110) to the stream encoder 125. The stream encoder 125 then encodes the current coding block by coding the displacement vector, IBC mode value and residual (if provided) into an example output encoded video bitstream 135.

Because the IBC encoder 110 can support multiple IBC modes (e.g., IBC mode 0 and up to seven IBC+ modes 1 to 7), the stream encoder 125 employs a syntax to represent the winning IBC mode value output by the IBC encoder 110. In some example, the stream encoder 125 employs a bit field to represent the IBC mode value, with one bit being used to indicate whether IBC was the winning encoding mode selected by the mode selector 120 (e.g., set to 1 if IBC encoding was selected by the mode selector 120, and 0 if one of the other prediction encoding modes was selected by the mode selector 120 for the current coding block). If IBC encoding was selected, the bit field also includes a variable group of up to three IBC mode value bits to represent the IBC mode value corresponding to the winning IBC/IBC+ mode for the current coding block. For example, the group of IBC mode value bits may be set to 000 for the conventional IBC mode 0, and 001 to 111, respectively, for IBC+ modes 1 to 7. In some examples the bit field is encoded after the displacement vector in the encoded video bitstream. Accordingly, the stream encoder 125 is an example of means for encoding an intra block copy mode as a bit pattern in a field of an encoded video bitstream.

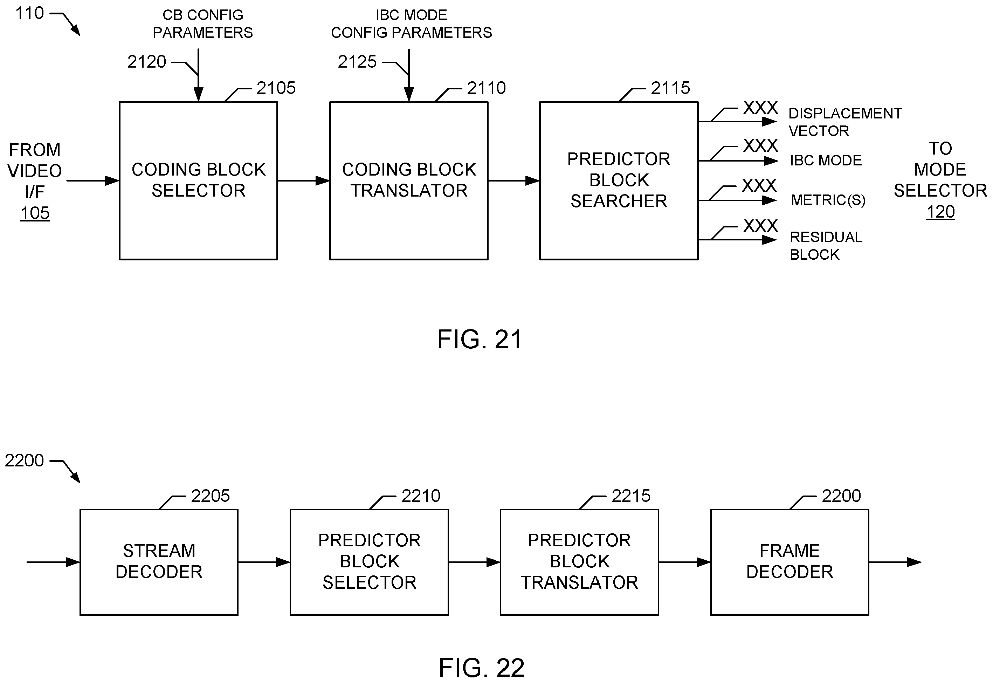

A block diagram of an example implementation of the IBC encoder 110 of FIG. 1 is illustrated in FIG. 21. The example IBC encoder 110 of FIG. 21 includes an example coding block selector 2105, an example coding block translator 2110, an example predictor block searcher 2115. In the illustrated example, the coding block selector 2105 is to select a current coding block for encoding based on one or more example coding block parameters 2120. For example, the coding block parameter(s) 2120 may specify the size and/or shape or the coding blocks to be processed by the IBC encoder 110. In some examples, the size may range from 4x4 to 128x128 for square coding blocks, and the shape may be square, rectangular, etc. For example, the coding block parameter(s) 2120 may specify that the coding blocks to be processed by the IBC encoder 110 are to be square 4x4 coding blocks consistent with the examples of FIGS. 2 and 5-11, rectangular 8x4 coding blocks consistent with the examples of FIGS. 12, 13, 16 and 17, rectangular 4x8 coding blocks consistent with the examples of FIGS. 14, 15, 18 and 19, etc. The coding block parameter(s) 2120 may be pre-determined, specified as configuration inputs, etc.

The example coding block translator 2110 performs one or more translation operations on a coding block of an image frame to determine a translated version of the coding block, as described above. For example, the translation operations implemented by the coding block translator 2110 may include a no translation operation corresponding to convention IBC mode 0, one or more of a first set of mirror operations and/or one or more of a second set of rotation operations corresponding to the set of enhanced IBC+ modes 1 to 7 described above, etc. In the illustrated example, the coding block translator 2110 accepts one or more example IBC mode configuration parameters 2125 to specify which IBC modes (e.g., the conventional IBC mode 0 and/or one or more of the enhanced IBC+ modes 1 to 7) are to be implemented by the coding block translator 2110 and, thus, supported by the IBC encoder 110. The IBC mode configuration parameter(s) 2125 may be pre-determined, specified as configuration inputs, etc. Accordingly, the coding block translator 2110 is an example of means for perform a translation operation on a coding block of an image frame to determine a translated version of the coding block.

In some examples, the IBC mode configuration parameter(s) 2125 specify that the coding block translator 2110 and, thus, the IBC encoder 110 are to support all IBC/IBC+ modes, including the conventional IBC mode 0 and all of the enhanced IBC+ modes 1 to 7. In some examples, for configuration 0, the bit field to represent the winning IBC mode value includes 4 bits, as described above, with one bit of the bit field used to indicate whether IBC was the winning encoding mode selected by the mode selector 120 (e.g., set to 1 if IBC encoding was selected by the mode selector 120, and 0 if one of the other prediction encoding modes was selected by the mode selector 120 for the current coding block). The other three bits are set to represent the IBC mode value corresponding to the winning IBC/IBC+ mode for the current coding block. For example, the group of IBC mode value bits may be set to 000 for the conventional IBC mode 0, and 001 to 111, respectively, for IBC+ modes 1 to 7. Table 1 below illustrates example bit patterns for the IBC mode value bits.

However, in some examples, the bit field used to encode the winning IBC mode value is a variable length bit field to improve coding performance. For example, the winning IBC mode value can be encoded such that more frequently occurring values are represented with fewer bits (e.g., 1 or 2 bits), and less frequently occurring values are represented with more bits (e.g., 3 or more bits). An example variable length encoding technique that can be used to encode the winning IBC mode value is Huffman coding, although other types of variable length encoding could also be used.

Table 1

| IBC Mode Value Bits | IBC Mode | Coding Block Translation |
| --- | --- | --- |
| 000 | IBC mode 0 | No translation |
| 001 | IBC+ mode 1 | 0-degree mirroring |
| 010 | IBC+ mode 2 | 45-degree mirroring |
| 011 | IBC+ mode 3 | 90-degree mirroring |
| 100 | IBC+ mode 4 | 135-degree mirroring |
| 101 | IBC+ mode 5 | 90-degree rotation |
| 110 | IBC+ mode 6 | 180-degree rotation |
| 111 | IBC+ mode 7 | 270-degree rotation |

In some examples, the IBC mode configuration parameter(s) 2125 specify that the coding block translator 2110 and, thus, the IBC encoder 110 are to support a subset of the IBC/IBC+ modes. For example, the IBC mode configuration parameter(s) 2125 may specify that the coding block translator 2110 and, thus, the IBC encoder 110 are to support the conventional IBC mode 0 and a subset of the enhanced IBC+ modes, which includes IBC+ mode 1 (0-degree mirroring), IBC+ mode 3 (90-degree mirroring), IBC+ mode 5 (90-degree rotation), IBC+ mode 6 (180-degree rotation), and IBC+ mode 7 (270-degree rotation). Such a configuration is referred to as configuration 1 herein. In some examples, for configuration 1, a bit field to represent the winning IBC mode value includes 4 bits, as described above, with one bit of the bit field used to indicate whether IBC was the winning encoding mode selected by the mode selector 120 (e.g., set to 1 if IBC encoding was selected by the mode selector 120, and 0 if one of the other prediction encoding modes was selected by the mode selector 120 for the current coding block). The other three bits are set to represent the IBC mode value corresponding to the winning IBC/IBC+ mode for the current coding block. For example, the group of IBC mode value bits may be set to according to Table 1 to represent the winning IBC mode. However, in some examples, variable length encoding can be used to encode bit field used to represent the winning IBC mode value, as described above. Although configuration 1 may exhibit reduced performance relative to configuration 0 because it includes fewer supported IBC modes, configuration 1 involves fewer translation operations being performed per coding block than configuration 0 and, thus, may exhibit faster coding performance.

As another example, the IBC mode configuration parameter(s) 2125 may specify that the coding block translator 2110 and, thus, the IBC encoder 110 are to support the conventional IBC mode 0 and a subset of the enhanced IBC+ modes, which includes IBC+ mode 1 (0-degree mirroring), IBC+ mode 3 (90-degree mirroring), IBC+ mode 5 (90-degree rotation), and IBC+ mode 6 (180-degree rotation). Such a configuration is referred to as configuration 2 herein. In some examples, for configuration 2, a bit field to represent the winning IBC mode value includes 4 bits, as described above, with one bit of the bit field used to indicate whether IBC was the winning encoding mode selected by the mode selector 120 (e.g., set to 1 if IBC encoding was selected by the mode selector 120, and 0 if one of the other prediction encoding modes was selected by the mode selector 120 for the current coding block). The other three bits are set to represent the IBC mode value corresponding to the winning IBC/IBC+ mode for the current coding block. For example, the group of IBC mode value bits may be set to according to Table 1 to represent the winning IBC mode. As another example, a first of the three bits could be set to indicate whether IBC mode 0 or one of the IBC+ modes was the winner (e.g., the bit is set to 0 if IBC mode 0 was the winner, and the bit is set to 1 if one of the other IBC+ modes was the winner). In such an example, the remaining 2 bits are used to represent the 4 possible IBC+ modes in configuration 2 (e.g., 00 = IBC+ mode 1, 01 = IBC+ mode 3, 10 = IBC+ mode 5, and 11 = IBC+ mode 6.) However, in some examples, variable length encoding can be used to encode bit field used to represent the winning IBC mode value, as described above. Although configuration 2 may exhibit reduced performance relative to configurations 0 and 1 because it includes fewer supported IBC modes, configuration 2 involves fewer translation operations being performed per coding block than configurations 0 and 1 and, thus, may exhibit faster coding performance.

As a further example, the IBC mode configuration parameter(s) 2125 may specify that the coding block translator 2110 and, thus, the IBC encoder 110 are to support the conventional IBC mode 0 and a subset of the enhanced IBC+ modes, which includes IBC+ mode 1 (0-degree mirroring), IBC+ mode 3 (90-degree mirroring), and IBC+ mode 6 (180-degree rotation). Such a configuration is referred to as configuration 3 herein. In some examples, for configuration 3, a bit field to represent the winning IBC mode value includes 3 bits, with one bit of the bit field used to indicate whether IBC was the winning encoding mode selected by the mode selector 120 (e.g., set to 1 if IBC encoding was selected by the mode selector 120, and 0 if one of the other prediction encoding modes was selected by the mode selector 120 for the current coding block). The other two bits are set to represent the 4 possible IBC modes in configuration 3 (e.g., 00 = IBC mode 0, 01 = IBC+ mode 1, 10 = IBC+ mode 3, and 11 = IBC+ mode 6.) However, in some examples, variable length encoding can be used to encode bit field used to represent the winning IBC mode value, as described above. Although configuration 3 may exhibit reduced performance relative to configurations 0, 1 and 2 because it includes fewer supported IBC modes, configuration 3 involves fewer translation operations being performed per coding block than configurations 0, 1 and 2 and, thus, may exhibit faster coding performance.

The example predictor block searcher 2115 of FIG. 21 performs IBC searches, as described above in connection with FIG. 20, for the different IBC modes implemented by the coding block translator 2110 (e.g., as configured by the configuration parameters 2125). In the illustrated example, the predictor block searcher 2115 performs multiple IBC searches for a given coding block being encoded to determine a candidate predictor block for the coding block, with each of the IBC searches corresponding to a different one of the IBC modes implemented by the coding block translator 2110. For example, to determine the candidate predictor block for the coding block, the predictor block searcher 2115 may perform a first IBC search based on an untranslated version of the coding block for IBC mode 0, and a second IBC search based on a translated version of the coding block for one of the other IBC+ modes. If multiple IBC+ modes are configured, the predictor block searcher 2115 may perform additional IBC searches based on the other, different translated versions of the coding block for the other IBC+ modes, and determine the candidate predictor block based on the results of all of the IBC searches performed for that coding block. For example, if the coding block translator 2110 is configured to support conventional IBC mode (e.g., IBC mode 0), one or more of the IBC mirroring modes (e.g., one or more of IBC+ modes 1 to 4) and one or more of the IBC rotation modes (e.g., one or more of IBC+ modes 5 to 7), the predictor block searcher 2115 may determine the candidate predictor block for the coding block being encoded by performing (i) a first intra block copy search based on an untranslated version of the coding block (corresponding to IBC mode 0), (ii) a second group of one of more IBC searches based on mirrored version(s) of the coding block (corresponding to the configured IBC mirroring mode(s)) and (iii) a third group of one or more IBC searches based on rotated version(s) of the coding block (corresponding to the configured IBC rotation mode(s)). Accordingly, the predictor block searcher 2115 is an example of means for performing intra block copy searches, the intra block copy searches including a first intra block copy search based on an untranslated version of a coding block and a second intra block copy search based on a translated version of the coding block to determine a candidate predictor block of previously encoded pixels of the image frame, with the candidate predictor block corresponding to an intra block copy predictor of the coding block.

After performing, for a given coding block, the IBC searches for the configured IBC modes, the predictor block searcher 2115 of the illustrated example outputs an example displacement vector 2130 representative of a location of the winning candidate predictor block relative to that coding block, and an example IBC mode value 2135 identifying the winning one of the IBC modes associated with the candidate predictor block, as described above. In the illustrated example, the predictor block searcher 2115 also outputs, for the given coding block, one or more example coding metrics 2140 (e.g., coding cost(s), coding score(s), etc.) for performing IBC coding using the selected candidate predictor block and IBC mode, as described above. In the illustrated example, the predictor block searcher 2115 further outputs, for the given coding block, an example residual 2145 representative of the difference between the candidate predictor block and the coding block, as described above.

A block diagram of an example IBC video decoder 2200 that may be used to decode an IBC-encoded video bitstream in accordance with teachings of this disclosure is illustrated in FIG. 22. The example IBC decoder 2200 of FIG. 22 includes an example stream decoder 2205, an example predictor block selector 2210, an example predictor block translator 2215 and an example frame decoder 2220. The stream decoder 2205 of the illustrated example decodes an example encoded video bitstream to obtain, for a given encoded coding block of a given frame to be decoded, a displacement vector representative of a location of a candidate predictor block in the frame for that coding block. The stream decoder 2205 also decodes the encoded video bitstream to obtain the IBC mode value representative of which one of the IBC modes is associated with that predictor block. In some examples, the stream decoder 2205 further decodes the encoded video bitstream to obtain a residual associated with the encoded coding block.

The predictor block selector 2210 selects a predictor block of previously decoded pixels of the given image frame being decoded. In the illustrated example, the predictor block selector 2210 selects the predictor block based on the decoded displacement vector. Accordingly, the predictor block selector 2210 is an example of means for selecting a predictor block of previously decoded pixels of an image frame being decoded, with the predictor block selected based on a displacement vector.

The predictor block translator 2215 of the illustrated examples performs a translation operation on the selected predictor block to determine a translated version of the predictor block. In the illustrated example, the translation operation is selected based on the decoded IBC mode value and can correspond to no translation (e.g., for IBC mode 0), one of a first set of mirror translation operations (e.g., for IBC+ modes 1 to 4), one of a set of rotation translation operations (e.g., for IBC+ modes 5 to 7). In the illustrated example, the predictor block translator 2215 performs the inverse of the translation associated with the decoded IBC mode value (because the coding block, and not the predictor block, was translated during encoding). Accordingly, the predictor block translator 2215 is an example of means for performing a translation operation on a predictor block to determine a translated version of the predictor block.

The frame decoder 2220 of the illustrated example decodes the encoded coding block of the image frame based on the translated version of the selected predictor block output from the predictor block translator 2215. For example, the frame decoder 2220 combines (e.g., adds) the decoded residual and the translated version of the predictor block to yield the decoded coding block. Accordingly, the frame decoder 2220 is an example of means for decoding a coding block of an image frame based on a translated version of a predictor block.

While example manners of implementing the video encoder 100, the IBC encoder 110 and the IBC decoder 2200 are illustrated in FIGS. 1-22, one or more of the elements, processes and/or devices illustrated in FIGS. 1-22 may be combined, divided, rearranged, omitted, eliminated and/or implemented in any other way. Further, the example video interface 105, the example prediction encoder(s) 115, the example mode selector 120, the example stream encoder 125, the example coding block selector 2105, the example coding block translator 2110, the example predictor block searcher 2115, the example predictor block selector 2210, the example predictor block translator 2215, the example frame decoder 2220 and/or, more generally, the example video encoder 100, the example IBC encoder 110 and/or the example IBC decoder 2200 may be implemented by hardware, software, firmware and/or any combination of hardware, software and/or firmware. Thus, for example, any of the example video interface 105, the example prediction encoder(s) 115, the example mode selector 120, the example stream encoder 125, the example coding block selector 2105, the example coding block translator 2110, the example predictor block searcher 2115, the example predictor block selector 2210, the example predictor block translator 2215, the example frame decoder 2220 and/or, more generally, the example video encoder 100, the example IBC encoder 110 and/or the example IBC decoder 2200 could be implemented by one or more analog or digital circuit(s), logic circuits, programmable processor(s), programmable controller(s), graphics processing unit(s) (GPU(s)), digital signal processor(s) (DSP(s)), application specific integrated circuit(s) (ASIC(s)), programmable logic device(s) (PLD(s)), field programmable gate arrays (FPGAs) and/or field programmable logic device(s) (FPLD(s)). When reading any of the apparatus or system claims of this patent to cover a purely software and/or firmware implementation, at least one of the example video encoder 100, the example IBC encoder 110, the example IBC decoder 2200, the example video interface 105, the example prediction encoder(s) 115, the example mode selector 120, the example stream encoder 125, the example coding block selector 2105, the example coding block translator 2110, the example predictor block searcher 2115, the example predictor block selector 2210, the example predictor block translator 2215, and/or the example frame decoder 2220 is/are hereby expressly defined to include a non-transitory computer readable storage device or storage disk such as a memory, a digital versatile disk (DVD), a compact disk (CD), a Blu-ray disk, etc. including the software and/or firmware. Further still, the example video encoder 100, the example IBC encoder 110 and/or the example IBC decoder 2200 may include one or more elements, processes and/or devices in addition to, or instead of, those illustrated in FIGS. 1-22, and/or may include more than one of any or all of the illustrated elements, processes and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

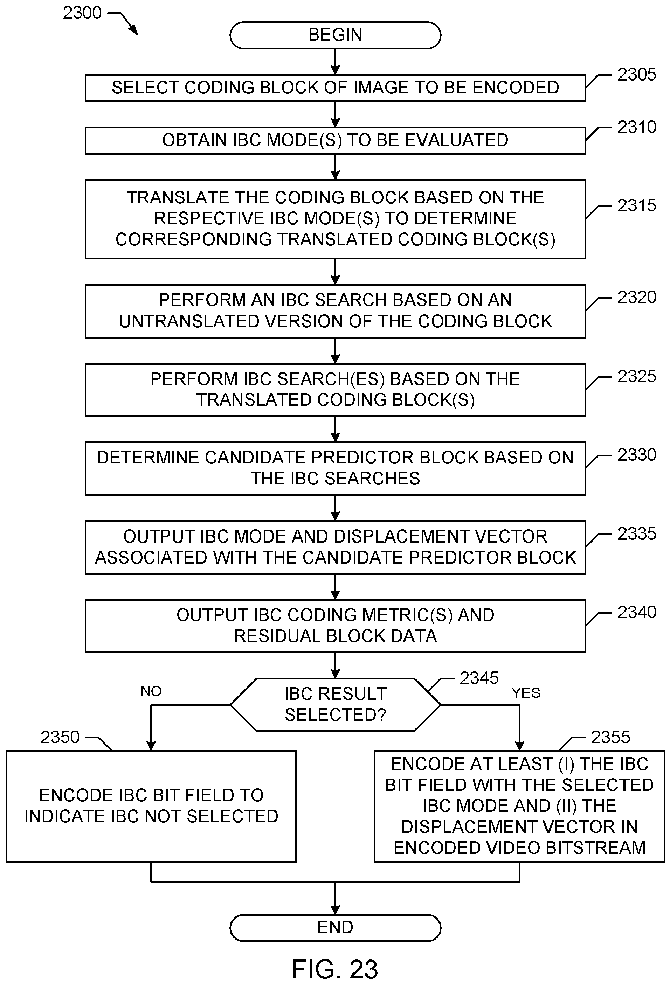

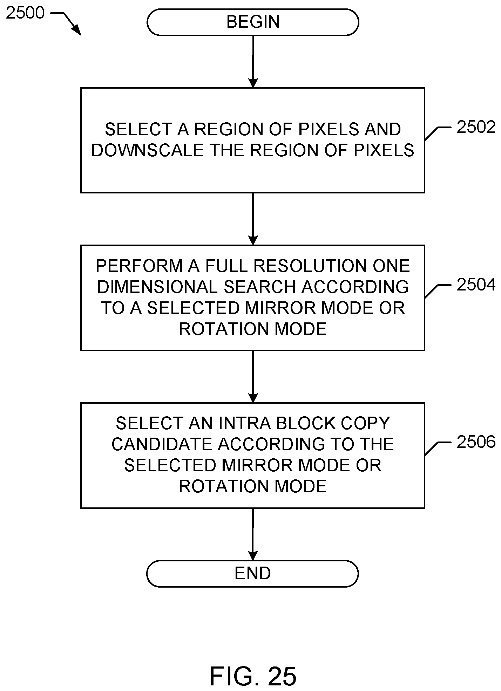

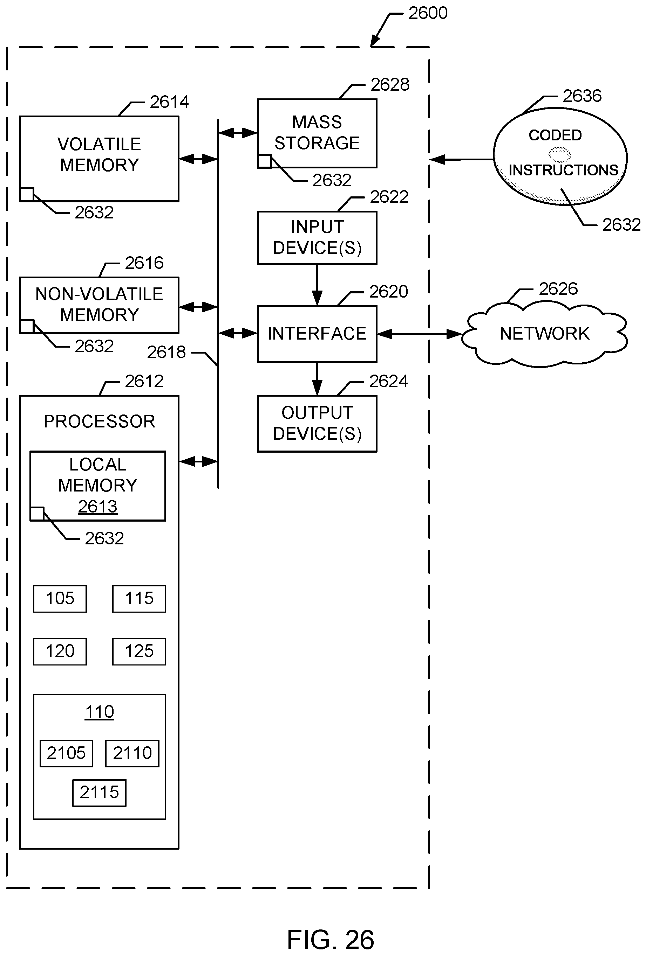

Flowcharts representative of example hardware logic, machine readable instructions, hardware implemented state machines, and/or any combination thereof for implementing the example video encoder 100 and/or the example IBC encoder 110 are shown in FIGS. 23 and 25. In these examples, the machine readable instructions may be one or more executable programs or portion(s) of an executable program for execution by a computer processor, such as the processor 2612 shown in the example processor platform 2600 discussed below in connection with FIG. 26. The one or more programs, or portion(s) thereof, may be embodied in software stored on a non-transitory computer readable storage medium such as a CD-ROM, a floppy disk, a hard drive, a DVD, a Blu-ray disk™, or a memory associated with the processor 2612, but the entire program or programs and/or parts thereof could alternatively be executed by a device other than the processor 2612 and/or embodied in firmware or dedicated hardware. Further, although the example program(s) is(are) described with reference to the flowcharts illustrated in FIGS. 23 and 25, many other methods of implementing the example video encoder 100 and/or the example IBC encoder 110 may alternatively be used. For example, with reference to the flowcharts illustrated in FIGS. 23 and 25, the order of execution of the blocks may be changed, and/or some of the blocks described may be changed, eliminated, combined and/or subdivided into multiple blocks. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware.

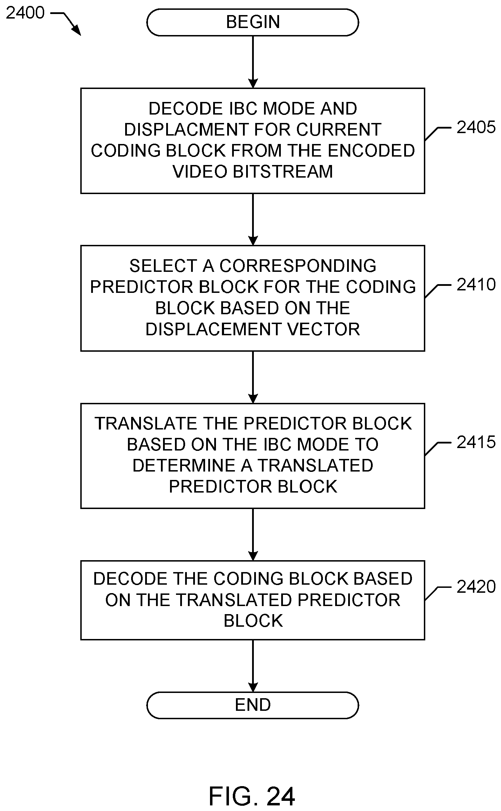

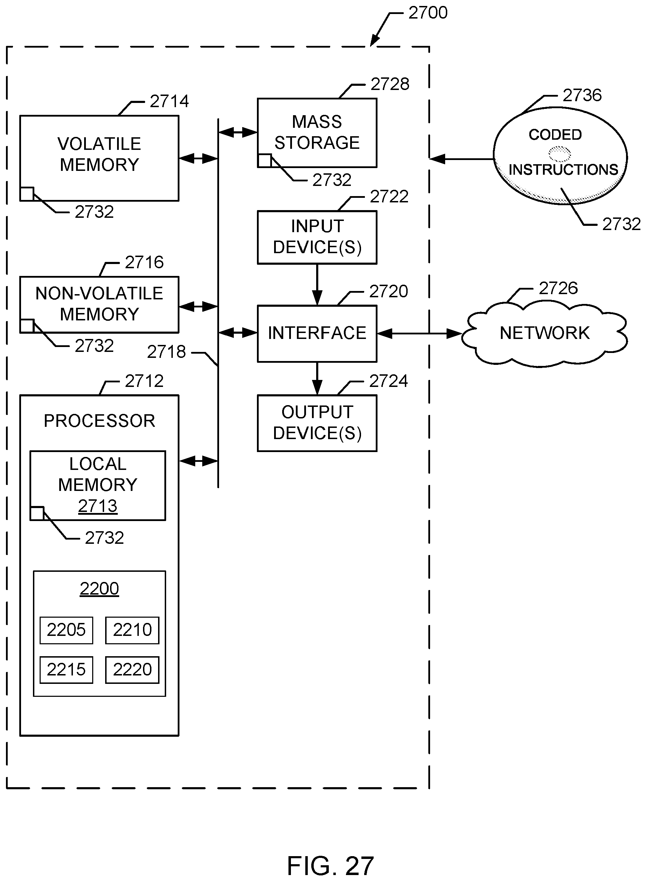

A flowchart representative of example hardware logic, machine readable instructions, hardware implemented state machines, and/or any combination thereof for implementing the example IBC decoder 2200 is shown in FIG. 24. In this example, the machine readable instructions may be one or more executable programs or portion(s) of an executable program for execution by a computer processor, such as the processor 2712 shown in the example processor platform 2700 discussed below in connection with FIG. 27. The one or more programs, or portion(s) thereof, may be embodied in software stored on a non-transitory computer readable storage medium such as a CD-ROM, a floppy disk, a hard drive, a DVD, a Blu-ray disk™, or a memory associated with the processor 2712, but the entire program or programs and/or parts thereof could alternatively be executed by a device other than the processor 2712 and/or embodied in firmware or dedicated hardware. Further, although the example program(s) is(are) described with reference to the flowchart illustrated in FIG. 24, many other methods of implementing the example IBC decoder 2200 may alternatively be used. For example, with reference to the flowchart illustrated in FIG. 24, the order of execution of the blocks may be changed, and/or some of the blocks described may be changed, eliminated, combined and/or subdivided into multiple blocks. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware.

The machine readable instructions described herein may be stored in one or more of a compressed format, an encrypted format, a fragmented format, a compiled format, an executable format, a packaged format, etc. Machine readable instructions as described herein may be stored as data (e.g., portions of instructions, code, representations of code, etc.) that may be utilized to create, manufacture, and/or produce machine executable instructions. For example, the machine readable instructions may be fragmented and stored on one or more storage devices and/or computing devices (e.g., servers). The machine readable instructions may require one or more of installation, modification, adaptation, updating, combining, supplementing, configuring, decryption, decompression, unpacking, distribution, reassignment, compilation, etc. in order to make them directly readable, interpretable, and/or executable by a computing device and/or other machine. For example, the machine readable instructions may be stored in multiple parts, which are individually compressed, encrypted, and stored on separate computing devices, wherein the parts when decrypted, decompressed, and combined form a set of executable instructions that implement a program such as that described herein.

In another example, the machine readable instructions may be stored in a state in which they may be read by a computer, but require addition of a library (e.g., a dynamic link library (DLL)), a software development kit (SDK), an application programming interface (API), etc. in order to execute the instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, the disclosed machine readable instructions and/or corresponding program(s) are intended to encompass such machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example processes of FIGS. 23-25 may be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media. Also, as used herein, the terms "computer readable" and "machine readable" are considered equivalent unless indicated otherwise.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

An example program 2300 that may be executed to implement the IBC encoder 110 of FIGS. 1 and/or 21 is represented by the flowchart shown in FIG. 23. With reference to the preceding figures and associated written descriptions, the example program 2300 begins execution at block 2305 at which the coding block selector 2105 of the IBC encoder 110 selects a coding block of an image to be encoded (e.g., based on the configuration parameter(s) 2120), as described above. At block 2310, the coding block translator 2110 obtains the IBC modes to be evaluated (e.g., based on the configuration parameter(s) 2125), as described above. At block 2315, the coding block translator 2110 translates, as described above, the coding block according to the different enhanced IBC+ modes to determine translated versions of the coding block that correspond, respectively, to the different enhanced IBC+ modes configured at block 2310.

At block 2320, the predictor block searcher 2115 of the IBC encoder 110 performs, as described above, an IBC search based on an untranslated version of the coding block, which corresponds to the conventional IBC mode 0. At block 2325, the predictor block searcher 2115 performs, as described above, one or more IBC searches based on the respective translated version(s) of the coding block determined for the enhanced IBC+ mode(s) configured at block 2310. At block 2330, the predictor block searcher 2115 determines, as described above, a candidate predictor block for the coding block based on the IBC searches performed at blocks 2320 and 2325. At block 2335, the predictor block searcher 2115 outputs the winning IBC mode and the displacement vector associated with the candidate predictor block, as described above. At block 2340, the predictor block searcher 2115 outputs coding metric(s) and residual block data associated with the predictor block, as described above.

At block 2345, the mode selector 120 determines, as described above, whether IBC coding is selected for the current coding block (e.g., over the other predictive coding technique(s) implemented by the predictive encoder(s) 115). If IBC coding is not selected (block 2345), then at block 2350 the stream encoder 125 encodes an IBC bit field to indicate IBC was not selected, as described above. However, IBC coding is selected (block 2345), then at block 2355 the stream encoder 125 encodes an IBC bit field to indicate IBC was selected and also encodes the winning IBC mode, and also encodes the displacement vector in the output encoded video bitstream, as described above.

An example program 2400 that may be executed to implement the IBC decoder 2200 of FIG. 22 is represented by the flowchart shown in FIG. 24. With reference to the preceding figures and associated written descriptions, the example program 2400 begins execution at block 2405 at which the stream decoder 2205 of the IBC decoder 2200 of FIG. 22 decodes, as described above, the IBC mode and displacement vector for a current coding block from an encoded video bitstream, as described above. At block 2410, the predictor block selector 2210 of the IBC decoder 2200 selects, based on the displacement vector, a predictor block for decoding the current block , as described above. At block 2415, the predictor block translator 2215 translates the predictor block based on the IBC mode to determine a translated version of the predictor block, as described above. At block 2420, the frame decoder 2220 of the IBC decoder 2200 decodes the current coding block based on the translated version of the predictor block, as described above.

An example program 2500 that may be executed to implement the video encoder 100 of FIG. 1 is represented by the flowchart shown in FIG. 25. FIG. 25 illustrates an example process for performing intra block copy, which in some examples can be implemented in the example electronic device 2800 below. At block 2502, a region of pixels is selected above a current block and the selected region is downscaled along with a source block. An exhaustive search is performed to identify the best block vector candidates in different shape arrangements. For example, the shape arrangements can include square, rectangle pairs, square quads, among other shape arrangements. The best block vector candidates are included into an Integer Motion Estimation (IME) at full resolution.

At block 2504, a full resolution one dimensional search is performed along an axis according to the selected mirror mode or rotation mode. For example, the previously encoded pixels may be as described in FIGS. 2-20.

At block 2506, a candidate intra-block-copy candidate is selected according to the selected mirror mode or rotation mode. For example, the candidate intra-block-copy candidate can be compared with other candidates based on quality and bit cost. Thus, the techniques of blocks 2502 and 2504 can be combined for high accuracy search within performance constrained encoding.

FIG. 26 is a block diagram of an example processor platform 2600 structured to execute the instructions of FIGS. 23 and/or 25 to implement the example video encoder 100 and/or the example IBC encoder 110 of FIGS. 1 and 21. The processor platform 2600 can be, for example, a server, a personal computer, a workstation, a self-learning machine (e.g., a neural network), a mobile device (e.g., a cell phone, a smart phone, a tablet such as an iPad™), a personal digital assistant (PDA), an Internet appliance, a DVD player, a CD player, a digital video recorder, a Blu-ray player, a gaming console, a personal video recorder, a set top box a digital camera, a headset or other wearable device, or any other type of computing device.

The processor platform 2600 of the illustrated example includes a processor 2612. The processor 2612 of the illustrated example is hardware. For example, the processor 2612 can be implemented by one or more integrated circuits, logic circuits, microprocessors, GPUs, DSPs, or controllers from any desired family or manufacturer. The hardware processor 2612 may be a semiconductor based (e.g., silicon based) device. In this example, the processor 2612 implements the example video encoder 100, the example IBC encoder 110, the example video interface 105, the example prediction encoder(s) 115, the example mode selector 120, the example stream encoder 125, the example coding block selector 2105, the example coding block translator 2110 and/or the example predictor block searcher 2115.

The processor 2612 of the illustrated example includes a local memory 2613 (e.g., a cache). The processor 2612 of the illustrated example is in communication with a main memory including a volatile memory 2614 and a non-volatile memory 2616 via a link 2618. The link 2618 may be implemented by a bus, one or more point-to-point connections, etc., or a combination thereof. The volatile memory 2614 may be implemented by Synchronous Dynamic Random Access Memory (SDRAM), Dynamic Random Access Memory (DRAM), RAMBUS® Dynamic Random Access Memory (RDRAM®) and/or any other type of random access memory device. The non-volatile memory 2616 may be implemented by flash memory and/or any other desired type of memory device. Access to the main memory 2614, 2616 is controlled by a memory controller.

The processor platform 2600 of the illustrated example also includes an interface circuit 2620. The interface circuit 2620 may be implemented by any type of interface standard, such as an Ethernet interface, a universal serial bus (USB), a Bluetooth® interface, a near field communication (NFC) interface, and/or a PCI express interface.

In the illustrated example, one or more input devices 2622 are connected to the interface circuit 2620. The input device(s) 2622 permit(s) a user to enter data and/or commands into the processor 2612. The input device(s) can be implemented by, for example, an audio sensor, a microphone, a camera (still or video), a keyboard, a button, a mouse, a touchscreen, a track-pad, a trackball, a trackbar (such as an isopoint), a voice recognition system and/or any other human-machine interface. Also, many systems, such as the processor platform 2600, can allow the user to control the computer system and provide data to the computer using physical gestures, such as, but not limited to, hand or body movements, facial expressions, and face recognition.

One or more output devices 2624 are also connected to the interface circuit 2620 of the illustrated example. The output devices 2624 can be implemented, for example, by display devices (e.g., a light emitting diode (LED), an organic light emitting diode (OLED), a liquid crystal display (LCD), a cathode ray tube display (CRT), an in-place switching (IPS) display, a touchscreen, etc.), a tactile output device, a printer and/or speakers(s). The interface circuit 2620 of the illustrated example, thus, typically includes a graphics driver card, a graphics driver chip and/or a graphics driver processor.

The interface circuit 2620 of the illustrated example also includes a communication device such as a transmitter, a receiver, a transceiver, a modem, a residential gateway, a wireless access point, and/or a network interface to facilitate exchange of data with external machines (e.g., computing devices of any kind) via a network 2626. The communication can be via, for example, an Ethernet connection, a digital subscriber line (DSL) connection, a telephone line connection, a coaxial cable system, a satellite system, a line-of-site wireless system, a cellular telephone system, etc.

The processor platform 2600 of the illustrated example also includes one or more mass storage devices 2628 for storing software and/or data. Examples of such mass storage devices 2628 include floppy disk drives, hard drive disks, compact disk drives, Blu-ray disk drives, redundant array of independent disks (RAID) systems, and digital versatile disk (DVD) drives.

The machine executable instructions 2632 corresponding to the instructions of FIGS. 23 and/or 25 may be stored in the mass storage device 2628, in the volatile memory 2614, in the non-volatile memory 2616, in the local memory 2613 and/or on a removable non-transitory computer readable storage medium, such as a CD or DVD 2636.

FIG. 27 is a block diagram of an example processor platform 2700 structured to execute the instructions of FIG. 24 to implement the example IBC decoder 2200 of FIG. 22. The processor platform 2700 can be, for example, a server, a personal computer, a workstation, a self-learning machine (e.g., a neural network), a mobile device (e.g., a cell phone, a smart phone, a tablet such as an iPad™), a PDA, an Internet appliance, a DVD player, a CD player, a digital video recorder, a Blu-ray player, a gaming console, a personal video recorder, a set top box a digital camera, a headset or other wearable device, or any other type of computing device.

The processor platform 2700 of the illustrated example includes a processor 2712. The processor 2712 of the illustrated example is hardware. For example, the processor 2712 can be implemented by one or more integrated circuits, logic circuits, microprocessors, GPUs, DSPs, or controllers from any desired family or manufacturer. The hardware processor 2712 may be a semiconductor based (e.g., silicon based) device. In this example, the processor 2712 implements the example IBC decoder 2200, the example predictor block selector 2210, the example predictor block translator 2215, and/or the example frame decoder 2220.

The processor 2712 of the illustrated example includes a local memory 2713 (e.g., a cache). The processor 2712 of the illustrated example is in communication with a main memory including a volatile memory 2714 and a non-volatile memory 2716 via a link 2718. The link 2718 may be implemented by a bus, one or more point-to-point connections, etc., or a combination thereof. The volatile memory 2714 may be implemented by SDRAM, DRAM, RDRAM® and/or any other type of random access memory device. The non-volatile memory 2716 may be implemented by flash memory and/or any other desired type of memory device. Access to the main memory 2714, 2716 is controlled by a memory controller.

The processor platform 2700 of the illustrated example also includes an interface circuit 2720. The interface circuit 2720 may be implemented by any type of interface standard, such as an Ethernet interface, a USB, a Bluetooth® interface, an NFC interface, and/or a PCI express interface.

In the illustrated example, one or more input devices 2722 are connected to the interface circuit 2720. The input device(s) 2722 permit(s) a user to enter data and/or commands into the processor 2712. The input device(s) can be implemented by, for example, an audio sensor, a microphone, a camera (still or video), a keyboard, a button, a mouse, a touchscreen, a track-pad, a trackball, a trackbar (such as an isopoint), a voice recognition system and/or any other human-machine interface. Also, many systems, such as the processor platform 2700, can allow the user to control the computer system and provide data to the computer using physical gestures, such as, but not limited to, hand or body movements, facial expressions, and face recognition.

One or more output devices 2724 are also connected to the interface circuit 2720 of the illustrated example. The output devices 2724 can be implemented, for example, by display devices (e.g., an LED, an OLED, an LCD, a CRT display, an IPS display, a touchscreen, etc.), a tactile output device, a printer and/or speakers(s). The interface circuit 2720 of the illustrated example, thus, typically includes a graphics driver card, a graphics driver chip and/or a graphics driver processor.

The interface circuit 2720 of the illustrated example also includes a communication device such as a transmitter, a receiver, a transceiver, a modem, a residential gateway, a wireless access point, and/or a network interface to facilitate exchange of data with external machines (e.g., computing devices of any kind) via a network 2726. The communication can be via, for example, an Ethernet connection, a digital subscriber line (DSL) connection, a telephone line connection, a coaxial cable system, a satellite system, a line-of-site wireless system, a cellular telephone system, etc.

The processor platform 2700 of the illustrated example also includes one or more mass storage devices 2728 for storing software and/or data. Examples of such mass storage devices 2728 include floppy disk drives, hard drive disks, compact disk drives, Blu-ray disk drives, RAID systems, and DVD drives.

The machine executable instructions 2732 corresponding to the instructions of FIG. 24 may be stored in the mass storage device 2728, in the volatile memory 2714, in the non-volatile memory 2716, in the local memory 2713 and/or on a removable non-transitory computer readable storage medium, such as a CD or DVD 2736.

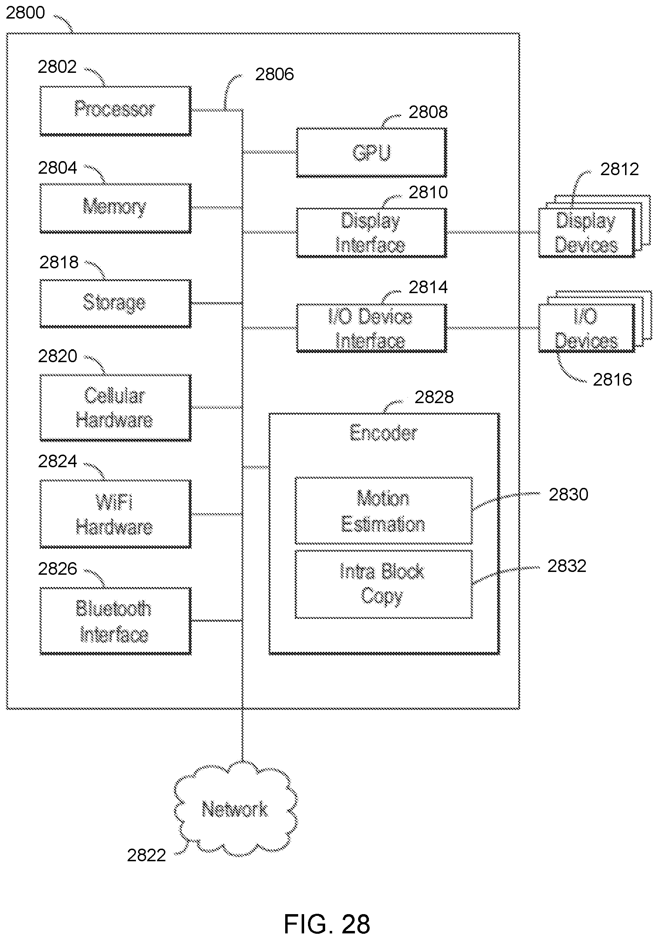

FIG. 28 is a block diagram of an example electronic device 2800 that enables enhanced intra-block copy modes for improved screen content compression. The electronic device 2800 may be, for example, a server, laptop computer, tablet computer, mobile phone, smart phone, or a wearable device, drone, among others. The electronic device 2800 may include a central processing unit (CPU) 2802 that is configured to execute stored instructions, as well as a memory device 2804 that stores instructions that are executable by the CPU 2802. The CPU may be coupled to the memory device 2804 by a bus 2806. Additionally, the CPU 2802 can be a single core processor, a multi-core processor, a computing cluster, or any number of other configurations. Furthermore, the electronic device 2800 may include more than one CPU 2802. The memory device 2804 can include random access memory (RAM), read only memory (ROM), flash memory, or any other suitable memory systems. For example, the memory device 2804 may include dynamic random-access memory (DRAM).

The electronic device 2800 also includes a graphics processing unit (GPU) 2808. As shown, the CPU 2802 can be coupled through the bus 2806 to the GPU 2808. The GPU 2808 can be configured to perform any number of graphics operations within the electronic device 2800. For example, the GPU 2808 can be configured to render or manipulate graphics images, graphics frames, videos, or the like, to be displayed to a user of the electronic device 2800. In some examples, the GPU 2808 includes a number of graphics engines, wherein each graphics engine is configured to perform specific graphics tasks, or to execute specific types of workloads. For example, the GPU 2808 may include an engine that processes video data via lossless pixel compression.

The CPU 2802 can be linked through the bus 2806 to a display interface 2810 configured to connect the electronic device 2800 to a plurality of di splay devices 2812. The display devices 2812 can include a display screen that is a built-in component of the electronic device 2800. The display devices 2812 can also include a computer monitor, television, or projector, among others, that is externally connected to the electronic device 2800.

The CPU 2802 can also be connected through the bus 2806 to an input/output (I/O) device interface 2814 configured to connect the electronic device 2800 to one or more I/O devices 2816. The I/O devices 2816 can include, for example, a keyboard and a pointing device, wherein the pointing device can include a touchpad or a touchscreen, among others. The I/O devices 2816 can be built-in components of the electronic device 2800, or can be devices that are externally connected to the electronic device 2800.

The electronic device 2800 may also include a storage device 2818. The storage device 2818 is a physical memory such as a hard drive, an optical drive, a flash drive, an array of drives, or any combinations thereof. The storage device 2818 can store user data, such as audio files, video files, audio/video files, and picture files, among others. The storage device 2818 can also store programming code such as device drivers, software applications, operating systems, and the like. The programming code stored to the storage device 2818 may be executed by the CPU 2802, GPU 2808, or any other processors that may be included in the electronic device 2800.

The CPU 2802 may be linked through the bus 2806 to cellular hardware 2820. The cellular hardware 2820 may be any cellular technology, for example, the 4G standard (International Mobile Telecommunications-Advanced (IMT-Advanced) Standard promulgated by the International Telecommunications Union - Radio communication Sector (ITU-R)). In this manner, the electronic device 2800 may access any network 2822 without being tethered or paired to another device, where the network 2822 is a cellular network.

The CPU 2802 may also be linked through the bus 2806 to WiFi hardware 2824. The WiFi hardware is hardware according to WiFi standards (standards promulgated as Institute of Electrical and Electronics Engineers' (IEEE) 802.11 standards). The WiFi hardware 2824 enables the electronic device 2800 to connect to the Internet using the Transmission Control Protocol and the Internet Protocol (TCP/IP), where the network 2822 is the Internet. Accordingly, the electronic device 2800 can enable end-to-end connectivity with the Internet by addressing, routing, transmitting, and receiving data according to the TCP/IP protocol without the use of another device. Additionally, a Bluetooth Interface 2826 may be coupled to the CPU 2802 through the bus 2806. The Bluetooth Interface 2826 is an interface according to Bluetooth networks (based on the Bluetooth standard promulgated by the Bluetooth Special Interest Group). The Bluetooth Interface 2826 enables the electronic device 2800 to be paired with other Bluetooth enabled devices through a personal area network (PAN). Accordingly, the network 2822 may be a PAN. Examples of Bluetooth enabled devices include a laptop computer, desktop computer, Ultrabook, tablet computer, mobile device, or server, among others.

The electronic device 2800 may include an encoder 2828. In some examples, the encoder 2828 may be a hardware encoder without programmable engines executing within the main loop of an encoder algorithm. This may be referred to as fixed function encoding. Generally, coding video data includes encoding the video to meet proper formats and specifications for recording and playback. The motion estimation 2830 may execute algorithms via fixed function hardware of the encoder 2828. Motion estimation is an important and computationally intensive task in video coding and video compression. In some examples, the motion estimation 2830 may include an HME, an AVC IME, and an HEVC IME. For example, the HME may perform a coarse-grained motion estimation search. Parameters such as multi-pass packing (PAK) parameters may calculated based on a target size or bit rate by a PAK module. In some examples, the encoder can be used in an iterative fashion to enable conditional multi-pass encoding. For example, the encoder may use tile or frame-based repetition. The electronic device 2800 also includes an intra block copy unit 2832. The intra block copy unit 2832 may enable a full resolution one dimensional search is performed along an axis according to the selected mirror mode or rotation mode. For example, the previously encoded pixels may be as described in FIGS. 2-20. A candidate intra-block-copy candidate may be selected according to the selected mirror mode or rotation mode. For example, the candidate intra-block-copy candidate can be compared with other candidates based on quality and bit cost.

The block diagram of FIG. 28 is not intended to indicate that the electronic device 2800 is to include all of the components shown in FIG. 28. Rather, the computing system 2800 can include fewer or additional components not illustrated in FIG. 28 (e.g., sensors, power management integrated circuits, additional network interfaces, etc.). The electronic device 2800 may include any number of additional components not shown in FIG. 28, depending on the details of the specific implementation. Furthermore, any of the functionalities of the CPU 2802 may be partially, or entirely, implemented in hardware and/or in a processor. For example, the functionality may be implemented with an application specific integrated circuit, in logic implemented in a processor, in logic implemented in a specialized graphics processing unit, or in any other device.

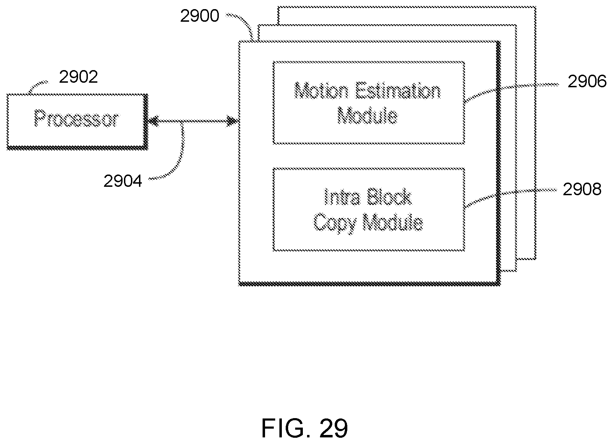

FIG. 29 is a block diagram showing a medium 2900 that contains logic for enhanced intra-block copy modes for improved screen content compression. The medium 2900 may be a computer-readable medium, including a non-transitory computer-readable medium that stores code that can be accessed by a processor 2902 over a computer bus 2904. For example, the computer-readable medium 2900 can be volatile or non-volatile data storage device. The medium 2900 can also be a logic unit, such as an Application Specific Integrated Circuit (ASIC), a Field Programmable Gate Array (FPGA), or an arrangement of logic gates implemented in one or more integrated circuits, for example.

The medium 2900 may include modules 2906-2908 configured to perform the techniques described herein. For example, a motion estimation module 2906 may include an HME, an AVC IME, and an HEVC IME. For example, the HME may perform a coarse-grained motion estimation search. Parameters such as multi-pass packing (PAK) parameters may calculated based on a target size or bit rate by a PAK module. In some examples, the encoder can be used in an iterative fashion to enable conditional multi-pass encoding. For example, the encoder may use tile or frame-based repetition. An intra block copy module 2908 may be configured to enable a full resolution one dimensional search is performed along an axis according to the selected mirror mode or rotation mode. For example, the previously encoded pixels may be as described in FIGS. 2-20. A candidate intra-block-copy candidate may be selected according to the selected mirror mode or rotation mode. For example, the candidate intra-block-copy candidate can be compared with other candidates based on quality and bit cost.

The block diagram of FIG. 29 is not intended to indicate that the medium 2900 is to include all of the components shown in FIG. 29. Further, the medium 2900 may include any number of additional components not shown in FIG. 29, depending on the details of the specific implementation.

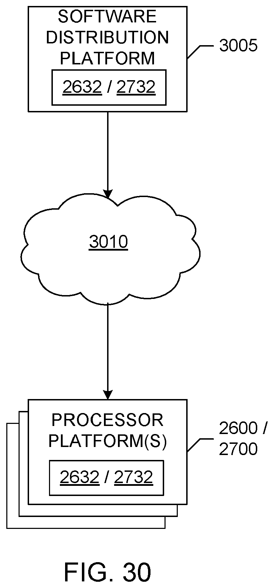

A block diagram illustrating an example software distribution platform 3005 to distribute software such as the example computer readable instructions 2632 and/or 2732 of FIGS. 26 and 27 to third parties is illustrated in FIG. 30. The example software distribution platform 3005 may be implemented by any computer server, data facility, cloud service, etc., capable of storing and transmitting software to other computing devices. The third parties may be customers of the entity owning and/or operating the software distribution platform. For example, the entity that owns and/or operates the software distribution platform may be a developer, a seller, and/or a licensor of software such as the example computer readable instructions 2632 and/or 2732 of FIGS. 26 and 27. The third parties may be consumers, users, retailers, OEMs, etc., who purchase and/or license the software for use and/or re-sale and/or sub-licensing. In the illustrated example, the software distribution platform 3005 includes one or more servers and one or more storage devices. The storage devices store the computer readable instructions 2632 and/or 2732, which may correspond to the example computer readable instructions 2300, 2400 and/or 2500 of FIGS. 23-25, as described above. The one or more servers of the example software distribution platform 3005 are in communication with a network 3010, which may correspond to any one or more of the Internet and/or any of the example networks 2600 and/or 2700 described above. In some examples, the one or more servers are responsive to requests to transmit the software to a requesting party as part of a commercial transaction. Payment for the delivery, sale and/or license of the software may be handled by the one or more servers of the software distribution platform and/or via a third party payment entity. The servers enable purchasers and/or licensors to download the computer readable instructions 2632 and/or 2732 from the software distribution platform 3005. For example, the software, which may correspond to the example computer readable instructions 2300 and/or 2500 of FIGS. 23 and 25, may be downloaded to the example processor platform 2600, which is to execute the computer readable instructions 2632 to implement the video encoder 100 and/or the IBC encoder 110. As another example, the software, which may correspond to the example computer readable instructions 2400 of FIG. 24, may be downloaded to the example processor platform 2700, which is to execute the computer readable instructions 2732 to implement the IBC decoder 2200. In some examples, one or more servers of the software distribution platform 3005 periodically offer, transmit, and/or force updates to the software (e.g., the example computer readable instructions 2632 and/or 2732 of FIGS. 26 and 27) to ensure improvements, patches, updates, etc. are distributed and applied to the software at the end user devices.

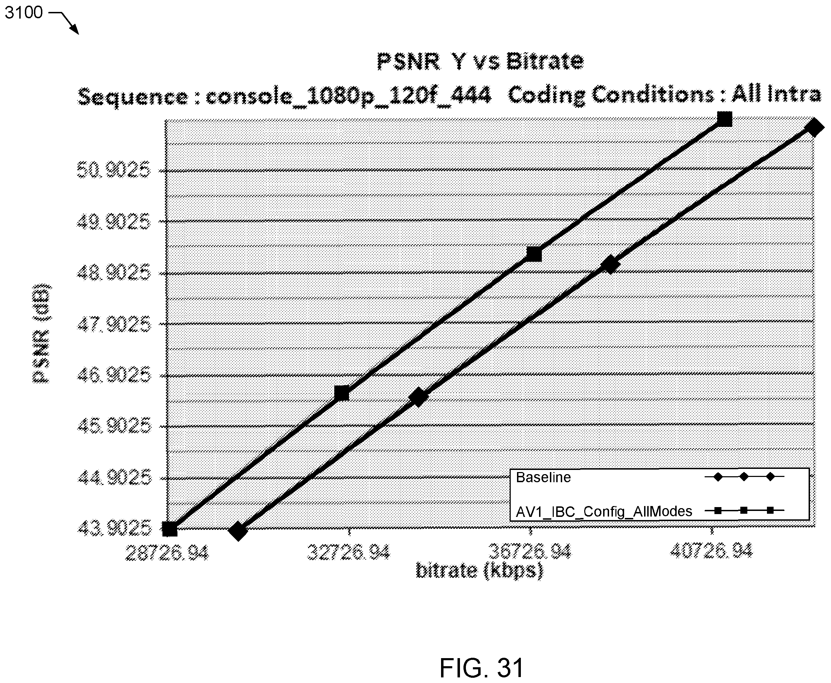

Example performance results and potential enhancements for video coding with multiple intra block copy modes implemented in accordance with teachings of this disclosure are illustrated in FIG. 31 and described hereinbelow. The performance results are based on an example implementation in which encoder and decoder changes were implemented for multiple PU shapes for some or all 7 IBC+ modes described arrive. In a first example implementation, the translation to the source coding block was applied prior to the intra block copy search. When performing prediction with IBC & IBC+ modes, if/when one of the proposed IBC+ modes win, the encoder of this example implementation coded the displacement vector (DV of the top-left position of the block) along with indicative bits to define the winning mode (mirror or rotation as specified by the 7 IBC+ modes above). At the decoder side, this information is decoded, and the appropriate inverse translation was applied. In this example implementation, since the encoder translates the source coding block, during reconstruction, the decoder performs an inverse translation on the predicted/winner block to achieve the same effect of the translation performed at the encoder side. This first example implementation supported configuration 0 described above and, thus, all 7 IBC+ modes were supported in this example. This first example implementation also used a variable length coded (max 3-bit field) to indicate the winning IBC mode.

Also, a second example implementation was constructed and tested. The second example implementation supported a sub-configuration of IBC+ modes to compare/contrast the quality trade-off with overhead of complexity as well as bits required to represent the winner IBC mode. Statistics from multiple experiments showed that the most commonly winning IBC+ modes are mirror angles 0 & 90 (corresponding to IBC+ modes 1 and 3, respectively, described above) and rotation angles 90, 180 & 270 (corresponding to IBC+ modes 5, 6 and 7, respectively, described above). Thus, this second example implementation supported configuration supported configuration 1 described above, which is restricted to the top 5 IBC+ Modes (Mirror 0 & 90, Rotation 90, 180 & 270). This second example implementation also used a variable length coded (max 3-bit field) to indicate the winning IBC mode. Since IBC+ modes 1 and 4, corresponding to 45-degree mirror and 135-degree mirror translations, experimentally contribute to very small percentages of winners, the sub-configuration of Configuration 1 provides a good trade-off of quality to complexity and bit-rate overhead.

As these example implementations add new IBC+ modes, both configuration 0, with 7 new IBC+ modes, and configuration 1, with 5 new IBC+ modes, may add complexity to the encoder since each input coding block is searched for potential winners for every supported IBC+ mode across the full set of coding block sizes (e.g., 4x4 through 128x128). Table 2 provides is a comparison between a prior IBC implementation (with no enhanced IBC+ modes) and the example enhanced IBC+ configuration 0 implementation described above. Table 2 shows an ~5.36x increase in encoder time for the example enhanced IBC+ configuration 0 implementation compared to the example prior non-enhanced IBC implementation for the sequences considered. With an intent to potentially reduce this complexity, the option of restricting the block-sizes to enable for IBC+ modes was also explored. To achieve that, experiments were performed with IBC shape buckets (128/64/32/16/8/4) each with their variant shapes included to extract statistics which indicate the most commonly winning IBC shapes. The experiments were conducted on a small sample set of 3 clips, namely Console 1080p, Flying Graphics 1080p & Map 720p, from the HEVC screen content coding extension (HEVC-SCC) common test conditions (CTC), in both 420 & 444 formats, each encoded in All-Intra configuration for 5 frames in 4 different quantization parameters (QPs) of (22, 27, 32, 37). These clips were chosen since they provided the maximum BD-rate improvements across the SCC clips tested (HEVC & the Alliance for Open Media Video 1 (AV1)).

Table 2 presents statistics on IBC+ winners across the chosen shape buckets. Each row in this table is a 20-frame average of IBC winner percentages (5 frames per QP * 4 QPs).

Table 2: IBC plus winners (in percentage)

| Content Name, Resolution | 128x128, 128x64, 64x128 | 64x64, 64x32, 32x64, | 32x32, 32x16, 16x32, 32x8, | 16x16, 16x8, 8x16, 16x4, | 8x8, 8x4, 4x8 | 4x4 |
|---|---|---|---|---|---|---|
| Map,720p,420 | 0.00 | 0.00 | 0.33 | 18.71 | 58.79 | 22.18 |
| Map,720p,444 | 0.00 | 0.00 | 0.10 | 11.86 | 54.65 | 33.39 |
| Console, 1080p,420 | 0.00 | 0.74 | 7.90 | 22.94 | 45.74 | 22.68 |
| Console,1080p,444 | 0.00 | 0.39 | 4.54 | 16.28 | 39.12 | 39.67 |
| FlyingGraphics,1080p,420 | 0.00 | 0.02 | 1.88 | 25.94 | 50.39 | 21.79 |

(continued)

| Content Name, Resolution | 128x128, 128x64, 64x128 | 64x64, 64x32, 32x64, | 32x32, 32x16, 16x32, 32x8, | 16x16, 16x8, 8x16, 16x4, | 8x8, 8x4, 4x8 | 4x4 |
|---|---|---|---|---|---|---|
| FlyingGraphics,1080p,444 | 0.04 | 0.34 | 1.78 | 18.19 | 45.57 | 34.08 |
| **Average** | 0.01 | 025 | 2.75 | 18.99 | 49.04 | 28.97 |

The statistics in Table 2 indicate that ~99.75% of all IBC winners are from shapes 4x4 through 32x32. Since the contributions from block shapes greater than 32x32 are negligible, restricting IBC+ modes to block shapes less than or equal to 2x32 is a viable restriction which would not result in any significant loss in quality. Also, Table 3 provides results indicating that the Encoder run-time speed up is sizeable with this restriction, e.g., from the ~5.3x increase associated with the configuration 0 implementation described above, the run-times drop down to an ~3.5x over the prior non-enhanced IBC implementation.

Table 3

| Content Name, Resolution | Latest AVI Encode Time (mins) | IBC+ Proposal Encode Time (mins) | IBC+ Proposal w/ Shapes Disabled Encode Time (mins) |
|---|---|---|---|
| Map720p,420 | 1.63 | 4.45 | 3.50 |
| Map,720p,444 | 1.88 | 4.53 | 3.68 |
| WebBrowsing,720p,420 | 1.50 | 10.53 | 7.14 |
| WebBrowning,720p,444 | 1.53 | 9.45 | 6.48 |
| Console,1080p,420 | 3.93 | 24.73 | 17.18 |
| Console,1080p,444 | 4.68 | 25.05 | 18.53 |
| FlyingGraphics,1080p,420 | 4.38 | 23.93 | 14.00 |
| FlyingGraphics,1080p,444 | 4.39 | 24.33 | 14.55 |
| **Run-Time** | 1x | 5.32x | 3.56x |

Overall, we see that for little to no loss in quality, a 33% speed up can be achieved for the enhanced IBC+ configuration 0 implementation by disabling IBC+ modes for coding blocks greater 32x32.

Next, example common test condition (CTC) performance results are discussed. Video coding with multiple intra block copy modes, as disclosed herein, is an extension of IBC and, as such, is targeted at screen content improvements. Experiments were conducted on screen content clips from both the AV1 CTC (420, 4 clips, 60 frames each) as well as the HEVC CTC (444 & 420, 12 clips, 120 frames each) to have a sizeable sample space for benchmarking quality results. Categories of the selected contents are as follows: 'text and graphics with motion (TGM)', 'mixed content (M)', and 'animation (A)'. The experiments used the standard four QP configuration that is common to CODEC testing : QPs [22, 27, 32, 37]. AV1 allows IBC to be enabled only an Intra frames. Thus, the experiments were run with an "All-Intra" configuration where each frame in the clip is coded as an Intra frame.

Table 4 lists the different screen content clips used in the experiments.

Table 4

| Clip Name | CTC | YUV Format | Category | Clip Resolution & Frame count |
|---|---|---|---|---|
| Dota2 | AV1 | 420 | A | 1920x1080p,60f |
| Minecraft | AV1 | 420 | A | 1920x1080p,60f |
| Starcraft | AV1 | 420 | A | 1920x1080p,60f |
| Wikipedia | AV1 | 420 | TGM | 1920x1080p,60f |
| map | HEVC | 444&420 | TGM | 1280x720p,120f |
| programming | HEVC | 444&420 | TGM | 1280x720p,120f |
| robot | HEVC | 444&420 | A | 1280x720p, 120f |

(continued)

| Clip Name | CTC | YUV Format | Category | Clip Resolution & Frame count |
|---|---|---|---|---|
| SlideShow | HEVC | 444&420 | TGM | 1280x720p,120f |
| webBrowsing | HBVC | 444&420 | TGM | 1280x720p, 120f |
| ChineseEditing | HEVC | 444&420 | TGM | 1920x1080p,120f |
| console | HBVC | 444&420 | TGM | 1920x1080p,120f |
| desktop | HEVC | 444&420 | TGM | 1920x1080p,120f |
| flyingGraphics | HEVC | 444&420 | TGM | 1920x1080p,120f |
| MissionControlClip3 | HEVC | 444&420 | M | 1920x1080p,120f |
| BasketballScreen | HEVC | 444&420 | M | 2560x1440p,120f |
| MissionControlClip2 | HEVC | 444&420 | M | 2560x1440p,120f |

Tables 5-8 illustrated the performance results of the experiments run with the AV1/HEVC SCC content clips of Table 4 for each of the enhanced IBC+ configurations tested.

Table 5: Configuration 0 (all 7 IBC+ modes enabled); YUV 444 Encoding

| | BD-rate (piecewise cubic) | | | |
|---|---|---|---|---|
| Clip name | Y | U | V | PSNR |
| map_444 | -3.29% | -3.61% | -4.16% | -3.44% |
| Programming_444 | -1.02% | -1.00% | -1.08% | -1.02% |
| Robot_444 | -0.02% | 0.05% | -0.02% | -0.01% |
| SlideShow_444 | -1.59% | -1.81% | -1.82% | -1.65% |
| webBrowsing_444 | -1.15% | -2.18% | -2.54% | -1.45% |
| ChineseEditing_444 | -2.10% | -2.74% | -3.17% | -2.31% |
| Console_444 | -5.13% | -4.93% | -5.00% | -5.09% |
| Desktop_444 | -2.69% | -3.21% | -3.52% | -2.86% |
| flvingGraphics_444 | -4.06% | -4.26% | -4.35% | -4.12% |
| MissionControlClip3_444 | -0.46% | -0.81% | -1.27% | -0.60% |
| BasketballScreen_444 | -1.16% | -1.70% | -1.91% | -1.32% |
| MissionControlClip2_444 | -0.64% | 0.91% | -1.20% | -0.75% |

Table 6: Configuration 0 (all 7 IBC+ modes enabled); YUV 420 Encoding

| | BD-rate (piecewise cubic) | | | |
|---|---|---|---|---|
| Clip name | Y | U | V | PSNR |
| Dota2_420 | 0.01% | 0.03% | 0.02% | 0.01% |
| Minecraft_420 | 0.01% | 0.14% | 0.17% | 0.05% |
| Starcraft_420 | -1.06% | -0.43% | -0.18% | -0.87% |
| wikipedia_420 | -0.96% | -0.11% | -0.28% | -0.77% |
| map_420 | -1.58% | -1.36% | -1.72% | -1.57% |
| pmgramming_420 | -0.96% | -0.45% | -0.49% | -0.84% |
| robot_420 | 0.01% | 0.09% | 0.00% | 0.02% |
| SlideShow_420 | -1.12% | -1.31% | -1.51% | -1.19% |

(continued)

| | BD-rate (piecewise cubic) | | | |
|---|---|---|---|---|
| Clip name | Y | U | V | PSNR |
| webBrowsing_420 | -0.28% | -0.18% | -0.13% | -0.24% |
| ChineseEditing_420 | -1.00% | 0.00% | -0.24% | -0.78% |
| console_420 | -1.52% | 0.67% | -1.02% | -1.35% |
| desktop_420 | -0.28% | 0.22% | 0.17% | -0.16% |
| flvingGraphics_420 | -1.85% | -1.26% | -1.27% | -1.70% |
| MissionControlClip3_420 | -0.06% | 0.02% | 0.10% | -0.03% |
| BasketballScreen_420 | -0.68% | -0.40% | -0.14% | -0.58% |
| MissionControlClip2_420 | -0.47% | -0.42% | -0.14% | -0.42% |

Table 7: Configuration 1 (top 5 IBC+ modes enabled); YUV 444 Encoding

| | BD-rate (piecewise cubic) | | | |
|---|---|---|---|---|
| Clip name | Y | U | V | PSNR |
| map_444 | -2.87% | -2.93% | -3.28% | -2.93% |
| programming_444 | 0.99% | -1.03% | -1.08% | -1.01% |
| robot_444 | -0.02% | 0.06% | 0.00% | 0.00% |
| SlideShow_444 | -1.19% | -1.41% | -1.20% | -1.22% |
| webBrowsing_444 | -1.31% | -2.14% | -2.38% | -1.54% |
| ChineseEditing_444 | -1.98% | -2.65% | -3.06% | -2.20% |
| console_444 | -4.80% | -4.60% | -4.62% | 4.75% |
| desktop_444 | -2.68% | -3.19% | -3.45% | -2.84% |
| flyingGraphics_444 | -3.86% | -4.06% | -4.14% | -3.92% |
| MissionControlClip3_444 | 0.46% | 0.81% | -1.24% | -0.60% |
| BasketballScreen_444 | -1.07% | -1.57% | -1.83% | -1.23% |
| MissionControlClip2_444 | -0.65% | -0.90% | -1.17% | -0.75% |

Table 8: Configuration 1 (top 5 IBC+ modes enabled); YUV 420 Encoding

| | BD-rate (piecewise cubic) | | | |
|---|---|---|---|---|
| Clip name | Y | U | V | PSNR |
| Dota2_420 | 0.01% | 0.00% | 0.03% | 0.01% |
| Minecraft_420 | 0.01% | 0.21% | 0.11% | 0.04% |
| Starcraft_420 | -1.04% | 0.44% | -0.04% | -0.84% |
| wikipedia_420 | -1.01% | -0.24% | -0.39% | -0.84% |
| map_420 | -1.42% | -1.41% | -1.52% | -1.43% |
| programming_420 | -0.98% | -0.40% | 0.47% | -0.85% |
| robot_420 | 0.01% | 0.03% | 0.02% | 0.01% |
| SlideShow_420 | -0.80% | -1.24% | -1.06% | -0.89% |
| webBrowsing_420 | -0.35% | 0.15% | 0.09% | -0.29% |
| ChineseEditing_420 | -0.98% | 0.11% | -0.32% | -0.79% |
| console_420 | -1.52% | -0.72% | -1.06% | -1.36% |

(continued)

| | BD-rate (piecewise cubic) | | | |
|---|---|---|---|---|
| Clip name | Y | U | V | PSNR |
| desktop_420 | -0.38% | 0.12% | 0.03% | -0.26% |
| flyingGraphics_420 | -2.25% | -1.82% | -1.80% | -2.14% |
| MissionControlClip3_420 | -0.11% | -0.04% | 0.05% | -0.08% |
| BasketballScrew_420 | 0.66% | 0.37% | 0.16% | -0.56% |
| MissionControlClip2_420 | -0.47% | -0.45% | -0.19% | -0.43% |

The example performance results in Tables 5 to 8 show that the example enhanced IBC+ configuration 0 implementation described above exhibited the best and consistent results across all screen content tested. Tables 9 and 10 below provide further example performance results for the example enhanced IBC+ configuration 0 implementation, but modified to incorporate the block size restriction of limiting IBC+ modes to shapes less than or equal to 32x32 as described above.

Table 9

| SCC All Intra (Av1_1BC_Config_AllModes vs. Baseline) | | | | |
|---|---|---|---|---|
| | YUV 444 Encoding | | | |
| Content Type | PSNR-Y | PSNR-U | PSNR-V | PSNR-YUV |
| TGM | -2.63% | -2.97% | -3.21% | -2.74% |
| M | -0.75% | -1.14% | -1.46% | -0.89% |
| A | -0.02% | 0.05% | -0.02% | -0.01% |
| Average | -1.94% | -2.26% | -2.50% | -2.05% |
| Minimum | -5.13% | -4.93% | -5.00% | -5.09% |

Table 10

| SCC All Intra (Av1_1BC_Config_AllModes vs. Baseline) | | | | |
|---|---|---|---|---|
| | YUV 420 Encoding | | | |
| Content Type | PSNR-Y | PSNR-U | PSNR-V | PSNR-YUV |
| TGM | -1.06% | -0.57% | -0.72% | -0.96% |
| M | -0.40% | -0.27% | -0.06% | -0.34% |
| A | -0.26% | -0.06% | 0.00% | -0.20% |
| Average | -0.74% | -0.38% | -0.42% | -0.65% |
| Minimum | -1.85% | -1.36% | -1.72% | -1.70% |

For both 444 and 420 screen content examples tested, the example enhanced IBC+ configuration 0 implementation exhibits the best results, with the 444 format showing an average improvement of ~2% in BD-PSNR with a high of ~5% for some of the clips, and the 420 format showing an average improvement of ~0.8% with some clips showing as much as ~1.9%. Analyzing the results across the different content categories (Text & Graphics Motion, Animation & Mixed Content), all three example enhanced IBC+ configuration configurations tested appear to show substantial improvements, especially for Text & Graphics Motion (TGM). The example enhanced IBC+ configuration 0 implementation again shows maximum improvements, with an average of ~2.63% in BD-PSNR for the 444 format content and ~1.1% for the 420 format content.

FIG. 31 includes an example graph 3100 showing the BD-rate improvement curve for PSNR-Y vs Bitrate for the proposed enhanced IBC modes for the sequence Console (1080p, 444) from the HBVC SCC CTC.

Of the example implementations tested, the example enhanced IBC+ configuration 0 implementation adds the most complexity to the encoder search, as it involves 7 different translations for each coding block. To reduce encoder complexity, other example implementations having restrictions to the coding shapes for which IBC+ modes were applied were also tested, including the example enhanced IBC+ configuration 1 described above. Tables 11 and 12 provide example performance results the for reduced-mode example enhanced IBC+ configuration 1, which includes the top-5 most commonly occurring IBC+ modes, as described above.

Table 11

| SCC All Intra (Av1_1BC_Config_Top5Modes vs. Baseline) | | | | |
|---|---|---|---|---|
| | YUV 444 Encoding | | | |
| Content Type | PSNR-Y | PSNR-U | PSNR-V | PSNR-YUV |
| TGM | -2.46% | -2.75% | -2.90% | 2.55% |
| M | -0.73% | -1.09% | -1.41% | -0.86% |
| A | -0.02% | 0.06% | 0.00% | 0.00% |
| Average | -1.82% | -2.10% | -2.29% | -1.92% |
| Minimum | -4.80% | -4.60% | -4.62% | -4.75% |

Table 12

| SCC All Intra (Av1_1BC_Config_Top5Modes vs. Baseline) | | | | |
|---|---|---|---|---|
| | YUV 420 Encoding | | | |
| Content Type | PSNR-Y | PSNR-U | PSNR-V | PSNR-YUV |
| TGM | -1.08% | -0.66% | -0.74% | -0.98% |
| M | -0.41% | -0.29% | -0.10% | -0.36% |
| A | -0.25% | -0.05% | 0.03% | -0.20% |
| Average | -0.75% | -0.44% | -0.43% | -0.67% |
| Minimum | -2.25% | -1.82% | -1.80% | -2.14% |

As shown in Tables 11 and 12, the example enhanced IBC+ configuration 1 implementation (with the top 5 IBC+ modes) exhibited an average BD-PSNR improvement of ~1.8% in for 444 format content across all tested clips with a high of ~4.8% on some clips, which is a slight reduction in comparison to the results for the example enhanced IBC+ configuration 0 implementation (which supported all IBC+ modes). Text and Graphics Motion (TGM) Clips also show a minor reduction in performance improvement for the example enhanced IBC+ configuration 1 implementation in comparison to the example enhanced IBC+ configuration 0 implementation, which exhibited an average BD-PSNR improvement of ~2.46% for 444 format and 1.1% for 420 format.

The results for Mixed content (M) appear substantially uniform across both example enhanced IBC+ configurations, with an average BD-PSNR improvements of ~0.75% for 444 format and ~0.40% for 420 format. Animation content did not show much improvement except for one 420 clip (StarCraft - 1080p, 60f), which exhibited an ~1.1% performance improvement. Overall, for encoder designs where complexity is a blocking issue, the example enhanced IBC+ configuration 1 implementation provides a good trade-off for quality improvement relative to encoder and hardware design complexity.

In addition to the encoder run-time experiments described above, experiments to analyze decoder execution times were also performed. Experiments using 4 clips from the HEVC SCC suite were conducted, namely Console/Flying Graphics (1080p) and Map/WebBrowsing (720p) in both 420 & 444 formats, and including decoding 120 frames of each clip in 4 different QPs of (22, 27, 32, 37). Table 13 provides a comparison of resulting example decoder run-times for a prior IBC decoder implementation relative to an enhanced IBC+ configuration 0 implementation with shapes greater than 32x32 disabled, as described above. Table 13 demonstrates that decoder run-times show a minor improvement (~3%) compared to current the prior IBC decoder implementation due to more IBC winners surfacing in the enhanced IBC+ configuration 0 implementation.

Table 13

|  | Latest AV1 | IBC+ Proposal w/ Shapes Disabled |
|---|---|---|
| Content Name, Resolution | Decode Time (sees) | Decode Time (sees) |
| Map,720p,420 | 22.79 | 20.09 |
| Map,720p,444 | 25.13 | 26.29 |
| WebBrowsing,720p,420 | 9.84 | 9.76 |
| WebBrowsing,720p,444 | 14.08 | 13.83 |
| Console,1080p,420 | 27.33 | 26.55 |
| Console,1080p,444 | 35.73 | 34.20 |
| FlyingGraphics,1080p,420 | 34.75 | 34.59 |
| FlyingGraphics,1080p,444 | 50.50 | 48.88 |
| Run-Time | 1x | 0.97x |

Overall, encoder run-times for enhanced IBC+ configurations disclosed herein exhibit ~250% increase over a prior, non-enhanced IBC implementation, whereas decoder run-times are seen to be a 3% speed-up compared to a prior, non-enhanced IBC implementation. Note that these results are for "All-Intra" mode exampled and, thus, in a real-world scenario, the overall run-time increase for a combined encoder and decoder sequence should be much smaller the enhanced IBC+ configurations disclosed herein.

The foregoing disclosure provides example solutions to implement video coding with multiple intra block copy modes. The following further examples, which include subject matter such as a video encoder apparatus, a non-transitory computer readable medium including instructions that, when executed, cause at least one processor to implement a video encoder, a video decoder apparatus, a non-transitory computer readable medium including instructions that, when executed, cause at least one processor to implement a video decoder, and associated methods, are disclosed herein. The disclosed examples can be implemented individually and/or in one or more combinations.

Example 1 includes a video encoder. The video encoder of example 1 includes a coding block translator to perform a translation operation on a coding block of an image frame to determine a translated version of the coding block. The video encoder of example 1 also includes a searcher to perform a first intra block copy search based on an untranslated version of the coding block and a second intra block copy search based on the translated version of the coding block to determine a candidate predictor block of previously encoded pixels of the image frame, the candidate predictor block corresponding to an intra block copy predictor of the coding block.

Example 2 includes the video encoder of example 1, wherein the translation operation is at least one of a mirror operation or a rotation operation.

Example 3 includes the video encoder of example 2, wherein the translation operation is the mirror operation, the translated version of the coding block is a mirrored version of the coding block, the coding block translator is to perform the rotation operation on the coding block to determine a rotated version of the coding block, and the searcher is to perform (i) the first intra block copy search based on the untranslated version of the coding block, (ii) the second intra block copy search based on the mirrored version of the coding block and (iii) a third intra block copy search based on the rotated version of the coding block to determine the candidate predictor block.

Example 4 includes the video encoder of any one of examples 1 to 3, wherein the translation operation is one of a plurality of translation operations including a first plurality of different mirror operations and a second plurality of different rotation operations.

Example 5 includes the video encoder of example 4, wherein the translated version of the coding block is a first translated version of the coding block, the coding block translator is to perform respective ones of the plurality of translation operations on the coding block to determine corresponding different translated versions of the coding block, the different translated versions of the coding block including the first translated version of the coding block, and the searcher is to perform respective intra block copy searches based on corresponding ones of the untranslated version of the coding block and the different translated versions of the coding block to determine the candidate predictor block.

Example 6 includes the video encoder of any one of examples 1 to 3, wherein the translation operation corresponds to one of a plurality of translation operations to be performed by the coding block translator, respective ones of a plurality of intra block copy modes are to represent corresponding ones of the translation operations, and the searcher is to output (i) a displacement vector representative of a location of the candidate predictor block relative to the coding block and (ii) a first one of the intra block copy modes associated with the candidate predictor block.

Example 7 includes the video encoder of example 6, further including a stream encoder to encode the first one of the intra block copy modes as a bit pattern in a field of an encoded video bitstream.

Example 8 includes at least one non-transitory computer readable medium including computer readable instructions that, when executed, cause one or more processors to at least (i) perform a translation operation on a coding block of an image frame to determine a translated version of the coding block, and (ii) perform a first intra block copy search based on an untranslated version of the coding block and a second intra block copy search based on the translated version of the coding block to determine a candidate predictor block of previously encoded pixels of the image frame, the candidate predictor block corresponding to an intra block copy predictor of the coding block.

Example 9 includes the non-transitory computer readable medium of example 8, wherein the translation operation is at least one of a mirror operation or a rotation operation.

Example 10 includes the non-transitory computer readable medium of example 9, wherein the translation operation is the mirror operation, the translated version of the coding block is a mirrored version of the coding block, and the instructions cause the one or more processors to perform the rotation operation on the coding block to determine a rotated version of the coding block, and perform (i) the first intra block copy search based on the untranslated version of the coding block, (ii) the second intra block copy search based on the mirrored version of the coding block and (iii) a third intra block copy search based on the rotated version of the coding block to determine the candidate predictor block.

Example 11 includes the non-transitory computer readable medium of any one of examples 8 to 10, wherein the translation operation is one of a plurality of translation operations including a first plurality of different mirror operations and a second plurality of different rotation operations.

Example 12 includes the non-transitory computer readable medium of example 11, wherein the translated version of the coding block is a first translated version of the coding block, and the instructions cause the one or more processors to perform respective ones of the plurality of translation operations on the coding block to determine corresponding different translated versions of the coding block, the different translated versions of the coding block including the first translated version of the coding block, and perform respective intra block copy searches based on corresponding ones of the untranslated version of the coding block and the different translated versions of the coding block to determine the candidate predictor block.

Example 13 includes the non-transitory computer readable medium of any one of examples 8 to 10, wherein the translation operation corresponds to one of a plurality of translation operations to be performed by the coding block translator, respective ones of a plurality of intra block copy modes are to represent corresponding ones of the translation operations, and the instructions cause the one or more processors to output (i) a displacement vector representative of a location of the candidate predictor block relative to the coding block and (ii) a first one of the intra block copy modes associated with the candidate predictor block.

Example 14 includes the non-transitory computer readable medium of example 13, wherein the instructions cause the one or more processors to encode the first one of the intra block copy modes as a bit pattern in a field of an encoded video bitstream.

Example 15 includes a video decoder. The video decoder of example 15 includes a predictor block selector to select a predictor block of previously decoded pixels of an image frame being decoded, the predictor block selector to select the predictor block based on a displacement vector. The video decoder of example 15 also includes a predictor block translator to perform a translation operation on the predictor block to determine a translated version of the predictor block. The video decoder of example 15 further includes a frame decoder to decode a coding block of the image frame based on the translated version of the predictor block.

Example 16 includes the video decoder of example 15, wherein the translation operation is one of a plurality of translation operations, and the predictor block translator is to select the translation operation based on an intra block copy mode associated with the coding block.

Example 17 includes the video decoder of example 16, wherein the plurality of translation operations includes a first plurality of different mirror operations and a second plurality of different rotation operations.

Example 18 includes the video decoder of example 16 or example 17, wherein the intra block copy mode is one of a plurality of intra block copy modes, and respective ones of the plurality of intra block copy modes are to represent corresponding ones of the plurality of translation operations.

Example 19 includes the video decoder of any one of examples 16 to 18, wherein the image frame is associated with an encoded video bitstream, and further including a stream decoder to decode the displacement vector and the intra block copy mode from the encoded video bitstream.

Example 20 includes the video decoder of example 19, wherein the intra block copy mode is encoded as a bit pattern in a field of the encoded video bitstream.

Example 21 includes at least one non-transitory computer readable medium including computer readable instructions that, when executed, cause one or more processors to at least (i) select a predictor block of previously decoded pixels of an image frame being decoded, the predictor block to be selected based on a displacement vector, (ii) perform a translation operation on the predictor block to determine a translated version of the predictor block, and (iii) decode a coding block of the image frame based on the translated version of the predictor block.

Example 22 includes the non-transitory computer readable medium of example 21, wherein the translation operation is one of a plurality of translation operations, and the instructions cause the one or more processors to select the translation operation based on an intra block copy mode associated with the coding block.

Example 23 includes the non-transitory computer readable medium of example 22, wherein the plurality of translation operations includes a first plurality of different mirror operations and a second plurality of different rotation operations.

Example 24 includes the non-transitory computer readable medium of example 22 or example 23, wherein the intra block copy mode is one of a plurality of intra block copy modes, and respective ones of the plurality of intra block copy modes are to represent corresponding ones of the plurality of translation operations.

Example 25 includes the non-transitory computer readable medium of any one of examples 22 to 24, wherein the image frame is associated with an encoded video bitstream, and the instructions cause the one or more processors to decode the displacement vector and the intra block copy mode from the encoded video bitstream, the intra block copy mode to be encoded as a bit pattern in a field of the encoded video bitstream.

Example 26 includes a video encoding method. The video encoding method of example 26 includes performing, by executing an instruction with at least one processor, a translation operation on a coding block of an image frame to determine a translated version of the coding block. The method of example 26 also includes performing, by executing an instruction with the at least one processor, a first intra block copy search based on an untranslated version of the coding block and a second intra block copy search based on the translated version of the coding block to determine a candidate predictor block of previously encoded pixels of the image frame, the candidate predictor block corresponding to an intra block copy predictor of the coding block.

Example 27 includes the method of example 26, wherein the translation operation is at least one of a mirror operation or a rotation operation.

Example 28 includes the method of example 27, wherein the translation operation is the mirror operation, the translated version of the coding block is a mirrored version of the coding block, and the method further includes performing the rotation operation on the coding block to determine a rotated version of the coding block, and performing (i) the first intra block copy search based on the untranslated version of the coding block, (ii) the second intra block copy search based on the mirrored version of the coding block and (iii) a third intra block copy search based on the rotated version of the coding block to determine the candidate predictor block.

Example 29 includes the method of any one of examples 26 to 28, wherein the translation operation is one of a plurality of translation operations including a first plurality of different mirror operations and a second plurality of different rotation operations.

Example 30 includes the method of example 29, wherein the translated version of the coding block is a first translated version of the coding block, and the method further includes performing respective ones of the plurality of translation operations on the coding block to determine corresponding different translated versions of the coding block, the different translated versions of the coding block including the first translated version of the coding block, and performing respective intra block copy searches based on corresponding ones of the untranslated version of the coding block and the different translated versions of the coding block to determine the candidate predictor block.

Example 31 includes the method of any one of examples 26 to 28, wherein the translation operation corresponds to one of a plurality of translation operations to be performed by the coding block translator, respective ones of a plurality of intra block copy modes are to represent corresponding ones of the translation operations, and the method includes outputting (i) a displacement vector representative of a location of the candidate predictor block relative to the coding block and (ii) a first one of the intra block copy modes associated with the candidate predictor block.

Example 32 includes the method of example 31, and the method further includes encoding the first one of the intra block copy modes as a bit pattern in a field of an encoded video bitstream.

Example 33 includes a video encoding apparatus. The video encoding apparatus of example 33 includes means for performing a translation operation on a coding block of an image frame to determine a translated version of the coding block. The video encoding apparatus of example 33 also includes means for performing intra block copy searches, the intra block copy searches including a first intra block copy search based on an untranslated version of the coding block and a second intra block copy search based on the translated version of the coding block to determine a candidate predictor block of previously encoded pixels of the image frame, the candidate predictor block corresponding to an intra block copy predictor of the coding block.

Example 34 includes the video encoding apparatus of example 1, wherein the translation operation is at least one of a mirror operation or a rotation operation.

Example 35 includes the video encoding apparatus of example 2, wherein the translation operation is the mirror operation, the translated version of the coding block is a mirrored version of the coding block, the means for performing the translation operation is to perform the rotation operation on the coding block to determine a rotated version of the coding block, and the means for performing intra block copy searches is to perform (i) the first intra block copy search based on the untranslated version of the coding block, (ii) the second intra block copy search based on the mirrored version of the coding block and (iii) a third intra block copy search based on the rotated version of the coding block to determine the candidate predictor block.

Example 36 includes the video encoding apparatus of any one of examples 33 to 35, wherein the translation operation is one of a plurality of translation operations including a first plurality of different mirror operations and a second plurality of different rotation operations.

Example 37 includes the video encoding apparatus of example 36, wherein the translated version of the coding block is a first translated version of the coding block, the means for performing the translation operation is to perform respective ones of the plurality of translation operations on the coding block to determine corresponding different translated versions of the coding block, the different translated versions of the coding block including the first translated version of the coding block, and the means for performing intra block copy searches is to perform respective intra block copy searches based on corresponding ones of the untranslated version of the coding block and the different translated versions of the coding block to determine the candidate predictor block.

Example 38 includes the video encoding apparatus of any one of examples 33 to 35, wherein the translation operation corresponds to one of a plurality of translation operations, respective ones of a plurality of intra block copy modes are to represent corresponding ones of the translation operations, and the means for performing intra block copy searches is to output (i) a displacement vector representative of a location of the candidate predictor block relative to the coding block and (ii) a first one of the intra block copy modes associated with the candidate predictor block.

Example 39 includes the video encoding apparatus of example 38, further including means for encoding the first one of the intra block copy modes as a bit pattern in a field of an encoded video bitstream.

Example 40 includes a video decoding method. The video decoding method of example 40 includes selecting, by executing an instruction with at least one processor, a predictor block of previously decoded pixels of an image frame being decoded, the predictor block to be selected based on a displacement vector. The method of example 40 also includes performing, by executing an instruction with the at least one processor, a translation operation on the predictor block to determine a translated version of the predictor block. The method of example 40 further includes decoding, by executing an instruction with the at least one processor, a coding block of the image frame based on the translated version of the predictor block.

Example 41 includes the method of example 40, wherein the translation operation is one of a plurality of translation operations, and the method includes selecting the translation operation based on an intra block copy mode associated with the coding block.

Example 42 includes the method of example 41, wherein the plurality of translation operations includes a first plurality of different mirror operations and a second plurality of different rotation operations.

Example 43 includes the method of example 41 or example 42, wherein the intra block copy mode is one of a plurality of intra block copy modes, and respective ones of the plurality of intra block copy modes are to represent corresponding ones of the plurality of translation operations.

Example 44 includes the method of any one of examples 41 to 43, wherein the image frame is associated with an encoded video bitstream, and the method further includes decoding the displacement vector and the intra block copy mode from the encoded video bitstream, the intra block copy mode to be encoded as a bit pattern in a field of the encoded video bitstream.

Example 45 includes a video decoding apparatus. The video decoding apparatus of example 45 includes means for selecting a predictor block of previously decoded pixels of an image frame being decoded, the predictor block selector to select the predictor block based on a displacement vector. The video decoding apparatus of example 45 also includes means for performing a translation operation on the predictor block to determine a translated version of the predictor block. The video decoding apparatus of example 45 further includes means for decoding a coding block of the image frame based on the translated version of the predictor block.

Example 46 includes the video decoding apparatus of example 45, wherein the translation operation is one of a plurality of translation operations, and the predictor block translator is to select the translation operation based on an intra block copy mode associated with the coding block.

Example 47 includes the video decoding apparatus of example 46, wherein the plurality of translation operations includes a first plurality of different mirror operations and a second plurality of different rotation operations.

Example 48 includes the video decoding apparatus of example 46 or example 47, wherein the intra block copy mode is one of a plurality of intra block copy modes, and respective ones of the plurality of intra block copy modes are to represent corresponding ones of the plurality of translation operations.

Example 49 includes the video decoding apparatus of any one of examples 46 to 48, wherein the image frame is associated with an encoded video bitstream, and further including means for decoding the displacement vector and the intra block copy mode from the encoded video bitstream.

Example 50 includes the video decoding apparatus of example 19, wherein the intra block copy mode is encoded as a bit pattern in a field of the encoded video bitstream.

Although certain example methods, apparatus and articles of manufacture have been disclosed herein, the scope of coverage of this patent is not limited thereto. On the contrary', this patent covers all methods, apparatus and articles of manufacture fairly falling within the scope of the claims of this patent.

The following section of the description relates to further examples. The numbered clauses in this section are not claims. The claims are set forth below in the later section headed "claims".

Clause 1. A video encoder comprising:

a coding block translator to perform a translation operation on a coding block of an image frame to determine a translated version of the coding block; and

a searcher to perform a first intra block copy search based on an untranslated version of the coding block and a second intra block copy search based on the translated version of the coding block to determine a candidate predictor block of previously encoded pixels of the image frame, the candidate predictor block corresponding to an intra block copy predictor of the coding block.

Clause 2. The video encoder of clause 1, wherein the translation operation is at least one of a mirror operation or a rotation operation.

Clause 3. The video encoder of clause 2, wherein the translation operation is the mirror operation, the translated version of the coding block is a mirrored version of the coding block, the coding block translator is to perform the rotation operation on the coding block to determine a rotated version of the coding block, and the searcher is to perform (i) the first intra block copy search based on the untranslated version of the coding block, (ii) the second intra block copy search based on the mirrored version of the coding block and (iii) a third intra block copy search based on the rotated version of the coding block to determine the candidate predictor block.

Clause 4. The video encoder of clause 1, wherein the translation operation is one of a plurality of translation operations including a first plurality of different mirror operations and a second plurality of different rotation operations.

Clause 5. The video encoder of clause **4,** wherein the translated version of the coding block is a first translated version of the coding block, the coding block translator is to perform respective ones of the plurality of translation operations on the coding block to determine corresponding different translated versions of the coding block, the different translated versions of the coding block including the first translated version of the coding block, and the searcher is to perform respective intra block copy searches based on corresponding ones of the untranslated version of the coding block and the different translated versions of the coding block to determine the candidate predictor block.

Clause 6. The video encoder of clause 1, wherein the translation operation corresponds to one of a plurality of translation operations to be performed by the coding block translator, respective ones of a plurality of intra block copy modes are to represent corresponding ones of the translation operations, and the searcher is to output (i) a displacement vector representative of a location of the candidate predictor block relative to the coding block and (ii) a first one of the intra block copy modes associated with the candidate predictor block.

Clause 7. The video encoder of clause 6, further including a stream encoder to encode the first one of the intra block copy modes as a bit pattern in a field of an encoded video bitstream.

Clause 8. At least one non-transitory computer readable medium comprising computer readable instructions that, when executed, cause one or more processors to at least:

perform a translation operation on a coding block of an image frame to determine a translated version of the coding block; and

perform a first intra block copy search based on an untranslated version of the coding block and a second intra block copy search based on the translated version of the coding block to determine a candidate predictor block of previously encoded pixels of the image frame, the candidate predictor block corresponding to an intra block copy predictor of the coding block.

Clause 9. The non-transitory computer readable medium of clause 8, wherein the translation operation is at least one of a mirror operation or a rotation operation.

Clause 10. The non-transitory computer readable medium of clause 9, wherein the translation operation is the mirror operation, the translated version of the coding block is a mirrored version of the coding block, and the instructions cause the one or more processors to:

perform the rotation operation on the coding block to determine a rotated version of the coding block; and

perform (i) the first intra block copy search based on the untranslated version of the coding block, (ii) the second intra block copy search based on the mirrored version of the coding block and (iii) a third intra block copy search based on the rotated version of the coding block to determine the candidate predictor block.

Clause 11. The non-transitory computer readable medium of clause 8, wherein the translation operation is one of a plurality of translation operations including a first plurality of different mirror operations and a second plurality of different rotation operations.

Clause 12. The non-transitory computer readable medium of clause 11, wherein the translated version of the coding block is a first translated version of the coding block, and the instructions cause the one or more processors to:

perform respective ones of the plurality of translation operations on the coding block to determine corresponding different translated versions of the coding block, the different translated versions of the coding block including the first translated version of the coding block; and

perform respective intra block copy searches based on corresponding ones of the untranslated version of the coding block and the different translated versions of the coding block to determine the candidate predictor block.

Clause 13. The non-transitory computer readable medium of clause 8, wherein the translation operation corresponds to one of a plurality of translation operations to be performed by the coding block translator, respective ones of a plurality of intra block copy modes are to represent corresponding ones of the translation operations, and the instructions cause the one or more processors to output (i) a displacement vector representative of a location of the candidate predictor block relative to the coding block and (ii) a first one of the intra block copy modes associated with the candidate predictor block.

Clause 14. The non-transitory computer readable medium of clause 13, wherein the instructions cause the one or more processors to encode the first one of the intra block copy modes as a bit pattern in a field of an encoded video bitstream.

Clause 15. A video decoder comprising:

a predictor block selector to select a predictor block of previously decoded pixels of an image frame being decoded, the predictor block selector to select the predictor block based on a displacement vector;

a predictor block translator to perform a translation operation on the predictor block to determine a translated version of the predictor block; and

a frame decoder to decode a coding block of the image frame based on the translated version of the predictor block.

Clause 16. The video decoder of clause 15, wherein the translation operation is one of a plurality of translation operations, and the predictor block translator is to select the translation operation based on an intra block copy mode associated with the coding block.

Clause 17. The video decoder of clause 16, wherein the plurality of translation operations includes a first plurality of different mirror operations and a second plurality of different rotation operations.

Clause 18. The video decoder of clause 16, wherein the intra block copy mode is one of a plurality of intra block copy modes, and respective ones of the plurality of intra block copy modes are to represent corresponding ones of the plurality of translation operations.

Clause 19. The video decoder of clause 16, wherein the image frame is associated with an encoded video bitstream, and further including a stream decoder to decode the displacement vector and the intra block copy mode from the encoded video bitstream.

Clause 20. The video decoder of clause 19, wherein the intra block copy mode is encoded as a bit pattern in a field of the encoded video bitstream.

Clause 21. At least one non-transitory computer readable medium comprising computer readable instructions that, when executed, cause one or more processors to at least:

select a predictor block of previously decoded pixels of an image frame being decoded, the predictor block to be selected based on a displacement vector;

perform a translation operation on the predictor block to determine a translated version of the predictor block; and

decode a coding block of the image frame based on the translated version of the predictor block.

Clause 22. The non-transitory computer readable medium of clause 21, wherein the translation operation is one of a plurality of translation operations, and the instructions cause the one or more processors to select the translation operation based on an intra block copy mode associated with the coding block.

Clause 23. The non-transitory computer readable medium of clause 22, wherein the plurality of translation operations includes a first plurality of different mirror operations and a second plurality of different rotation operations.

Clause 24. The non-transitory computer readable medium of clause 22, wherein the intra block copy mode is one of a plurality of intra block copy modes, and respective ones of the plurality of intra block copy modes are to represent corresponding ones of the plurality of translation operations.

Clause 25. The non-transitory computer readable medium of clause 22, wherein the image frame is associated with an encoded video bitstream, and the instructions cause the one or more processors to decode the displacement vector and the intra block copy mode from the encoded video bitstream, the intra block copy mode to be encoded as a bit pattern in a field of the encoded video bitstream.

**Claims**

1. An encoder comprising:

   interface circuitry;
   machine-readable instructions; and
   at least one processor circuit to be programmed based on the machine-readable instructions to:

      transform a current block of a picture to generate a transformed block, the transformation to flip the current block to generate the transformed block;
      perform an intra block copy search based on the transformed block to obtain a prediction block associated with the picture;
      determine residual data based on the transformed block and the prediction block;
      set a syntax value to indicate a type of the transformation; and
      generate an encoded bitstream based on the residual data and the syntax value.

2. The encoder of claim 1,

   wherein one or more of the at least one processor circuit is to flip the current block horizontally to generate the transformed block, or
   wherein one or more of the at least one processor circuit is to flip the current block vertically to generate the transformed block, or
   wherein one or more of the at least one processor circuit is to flip the current block horizontally and vertically to generate the transformed block.

3. The encoder of claim 1, wherein the syntax value is a first syntax value, and one or more of the at least one processor circuit is to set a second syntax value associated with intra block coding of the original block.

4. The encoder of claim 1, wherein one or more of the at least one processor circuit is to base the intra block copy search on a hash search.

5. The encoder of claim 1, wherein the intra block copy search is a first intra block copy search, the prediction block is a first prediction block, and one or more o the at least one processor circuit is to perform a second intra block copy search based on the current block to obtain a second prediction block associated with the picture.

6. At least one non-transitory machine-readable medium storage medium comprising machine-readable instructions to cause at least one processor circuit to at least:

      transform a current block of a picture to generate a transformed block, the transformation to flip the current block to generate the transformed block;
      perform an intra block copy search based on the transformed block to obtain a prediction block associated with the picture;
      determine residual data based on the transformed block and the prediction block;
      set a syntax value to indicate a type of the transformation ; and
      generate an encoded bitstream based on the residual data and the syntax value.

7. The at least one non-transitory machine-readable medium storage medium of claim 6,

   wherein the machine-readable instructions are to cause one or more of the at least one processor circuit to flip the current block horizontally to generate the transformed block, or
   wherein the machine-readable instructions are to cause one or more of the at least one processor circuit to flip the current block vertically to generate the transformed block, or
wherein the machine-readable instructions are to cause one or more of the at least one processor circuit to flip the current block horizontally and vertically to generate the transformed block.

8. The at least one non-transitory machine-readable medium storage medium of claim 6, wherein the syntax value is a first syntax value, and the machine-readable instructions are to cause one or more of the at least one processor circuit to set a second syntax value associated with intra block coding of the original block.

9. The at least one non-transitory machine-readable medium storage medium of claim 6, wherein the machine-readable instructions are to cause one or more of the at least one processor circuit to base the intra block copy search on a hash search.

10. The at least one non-transitory machine-readable medium storage medium of claim 6, the prediction block is a first prediction block, and the machine-readable instructions are to cause one or more of the at least one processor circuit to perform a second intra block copy search based on the current block to obtain a second prediction block associated with the picture.

11. A method comprising:

transforming a current block of a picture to generate a transformed block, the transforming to flip the current block to generate the transformed block;
performing an intra block copy search based on the transformed block to obtain a prediction block associated with the picture;
determining residual data based on the transformed block and the prediction block;
setting a syntax value to indicate a type of the transformation ; and
generating an encoded bitstream based on the residual data and the syntax value.

12. The method of claim 11,

wherein the transforming includes flipping the current block horizontally to generate the transformed block, or
wherein the transforming includes flipping the current block vertically to generate the transformed block, or
wherein the transforming includes flipping the current block horizontally and vertically to generate the transformed block.

13. The method of claim 11, wherein the syntax value is a first syntax value, and including setting a second syntax value associated with intra block coding of the original block.

14. The method of claim 11, wherein the intra block copy search is based on a hash search.

15. The method of claim 11, the prediction block is a first prediction block, and including performing a second intra block copy search based on the current block to obtain a second prediction block associated with the picture.

FIG. 1

EP 4 787 846 A2

200

| | | | |
|---|---|---|---|
| P00 | P01 | P02 | P03 |
| P10 | P11 | P12 | P13 |
| P20 | P21 | P22 | P23 |
| P30 | P31 | P32 | P33 |

FIG. 2

300

Y | Mirror 90 Deg
| (Across Y-Axis) ⌐ 315

Mirror 45 Deg
(Across Y/X=1 Axis) ⌐ 310

Mirror 0 Deg
(Across X-Axis)

X    Mirror 135 Deg
(Across Y/X= -1 Axis) ⌐ 320

305

Proposed Mirroring Modes

## FIG. 3

400

Y

Rotate by
90 Deg ⌐ 405

Rotate by
270 Deg
415

X

Rotate by
180 Deg ⌐ 410

Proposed Rotation Modes

## FIG. 4

600

| P33 | P23 | P13 | P03 |
| P32 | P22 | P12 | P02 |
| P31 | P21 | P11 | P01 |
| P30 | P20 | P10 | P00 |

Mirror 45 Degrees

FIG. 6

500

| P33 | P23 | P13 | P03 |
| P32 | P22 | P12 | P02 |
| P31 | P21 | P11 | P01 |
| P30 | P20 | P10 | P00 |

Mirror 0 Degrees

FIG. 5

700 →

| P03 | P02 | P01 | P00 |
|-----|-----|-----|-----|
| P13 | P12 | P11 | P10 |
| P23 | P22 | P21 | P20 |
| P33 | P32 | P31 | P30 |

Mirror 90 Degrees

FIG. 7

800 →

| P00 | P10 | P20 | P30 |
|-----|-----|-----|-----|
| P01 | P11 | P21 | P31 |
| P02 | P12 | P22 | P32 |
| P03 | P13 | P23 | P33 |

Mirror 135 Degrees

FIG. 8

Rotate 180 Degrees

FIG. 10

Rotate 90 Degrees

FIG. 9

1100 —

| | | | |
|------|------|------|------|
| P03 | P13 | P23 | P33 |
| P02 | P12 | P22 | P32 |
| P01 | P11 | P21 | P31 |
| P00 | P10 | P20 | P30 |

Rotate 270 Degrees

FIG. 11

1200

| P00 | P01 | P02 | P03 | P04 | P05 | P06 | P07 |
|-----|-----|-----|-----|-----|-----|-----|-----|
| P10 | P11 | P12 | P13 | P14 | P15 | P16 | P17 |
| P20 | P21 | P22 | P23 | P24 | P25 | P26 | P27 |
| P30 | P31 | P32 | P33 | P34 | P35 | P36 | P37 |

**8x4 CODING BLOCK**

## FIG. 12

1300

| P30 | P31 | P32 | P33 | P34 | P35 | P36 | P37 |
|-----|-----|-----|-----|-----|-----|-----|-----|
| P20 | P21 | P22 | P23 | P24 | P25 | P26 | P27 |
| P10 | P11 | P12 | P13 | P14 | P15 | P16 | P17 |
| P00 | P01 | P02 | P03 | P04 | P05 | P06 | P07 |

**MIRROR 0 DEGREES**

## FIG. 13

1500

| P00 | P01 | P02 | P03 |
|-----|-----|-----|-----|
| P10 | P11 | P12 | P13 |
| P20 | P21 | P22 | P23 |
| P30 | P31 | P32 | P33 |
| P40 | P41 | P42 | P43 |
| P50 | P51 | P52 | P53 |
| P60 | P61 | P62 | P63 |
| P70 | P71 | P72 | P73 |

MIRROR 90 DEGREES

FIG. 15

1400

| P00 | P01 | P02 | P03 |
|-----|-----|-----|-----|
| P10 | P11 | P12 | P13 |
| P20 | P21 | P22 | P23 |
| P30 | P31 | P32 | P33 |
| P40 | P41 | P42 | P43 |
| P50 | P51 | P52 | P53 |
| P60 | P61 | P62 | P63 |
| P70 | P71 | P72 | P73 |

4X8 CODING BLOCK

FIG. 14

FIG. 17

**MIRROR 45 DEGREES**
**PU 4X8**

1700

| P07 | P17 | P27 | P37 |
| P06 | P16 | P26 | P36 |
| P05 | P15 | P25 | P35 |
| P04 | P14 | P24 | P34 |
| P03 | P13 | P23 | P33 |
| P02 | P12 | P22 | P32 |
| P01 | P11 | P21 | P31 |
| P00 | P10 | P20 | P30 |

FIG. 16

8x4 CODING BLOCK

1600

| P00 | P01 | P02 | P03 | P04 | P05 | P06 | P07 |
| P10 | P11 | P12 | P13 | P14 | P15 | P16 | P17 |
| P20 | P21 | P22 | P23 | P24 | P25 | P26 | P27 |
| P30 | P31 | P32 | P33 | P34 | P35 | P36 | P37 |

| | | | |
|---|---|---|---|
| P00 | P01 | P02 | P03 |
| P10 | P11 | P12 | P13 |
| P20 | P21 | P22 | P23 |
| P30 | P31 | P32 | P33 |
| P40 | P41 | P42 | P43 |
| P50 | P51 | P52 | P53 |
| P60 | P61 | P62 | P63 |
| P70 | P71 | P72 | P73 |

**4X8 CODING BLOCK**

**FIG. 18**

1900 ⟋

| | | | | | | | |
|---|---|---|---|---|---|---|---|
| P70 | P60 | P50 | P40 | P30 | P20 | P10 | P00 |
| P71 | P61 | P51 | P41 | P31 | P21 | P11 | P01 |
| P72 | P62 | P52 | P62 | P32 | P22 | P12 | P02 |
| P73 | P63 | P53 | P43 | P33 | P23 | P13 | P03 |

**ROTATION 90 DEGRESS**
**PU 8X4**

**FIG. 19**

EP 4 787 846 A2

FIG. 20

110 ⟍

CB CONFIG
PARAMETERS

IBC MODE
CONFIG PARAMETERS

2120 ⟍              2125 ⟍

2105                 2110                 2115

FROM
VIDEO
I/F
105

CODING BLOCK
SELECTOR

CODING BLOCK
TRANSLATOR

PREDICTOR
BLOCK
SEARCHER

XXX → DISPLACEMENT
VECTOR

XXX → IBC MODE

XXX → METRIC(S)

XXX → RESIDUAL
BLOCK

TO
MODE
SELECTOR
120

FIG. 21

2200 ⟍

2205                 2210                 2215                 2200

STREAM
DECODER

PREDICTOR
BLOCK
SELECTOR

PREDICTOR
BLOCK
TRANSLATOR

FRAME
DECODER

FIG. 22

2300

```
                    ┌─────────────────────┐
                    │        BEGIN        │
                    └─────────────────────┘
                              │
        ┌─────────────────────────────────────────────┐
        │ SELECT CODING BLOCK OF IMAGE TO BE ENCODED   │── 2305
        └─────────────────────────────────────────────┘
                              │
        ┌─────────────────────────────────────────────┐
        │      OBTAIN IBC MODE(S) TO BE EVALUATED      │── 2310
        └─────────────────────────────────────────────┘
                              │
        ┌─────────────────────────────────────────────┐
        │  TRANSLATE THE CODING BLOCK BASED ON THE     │
        │  RESPECTIVE IBC MODE(S) TO DETERMINE         │── 2315
        │  CORRESPONDING TRANSLATED CODING BLOCK(S)    │
        └─────────────────────────────────────────────┘
                              │
        ┌─────────────────────────────────────────────┐
        │    PERFORM AN IBC SEARCH BASED ON AN         │── 2320
        │  UNTRANSLATED VERSION OF THE CODING BLOCK    │
        └─────────────────────────────────────────────┘
                              │
        ┌─────────────────────────────────────────────┐
        │    PERFORM IBC SEARCH(ES) BASED ON THE       │── 2325
        │       TRANSLATED CODING BLOCK(S)             │
        └─────────────────────────────────────────────┘
                              │
        ┌─────────────────────────────────────────────┐
        │ DETERMINE CANDIDATE PREDICTOR BLOCK BASED ON │── 2330
        │            THE IBC SEARCHES                  │
        └─────────────────────────────────────────────┘
                              │
        ┌─────────────────────────────────────────────┐
        │  OUTPUT IBC MODE AND DISPLACEMENT VECTOR     │── 2335
        │ ASSOCIATED WITH THE CANDIDATE PREDICTOR BLOCK│
        └─────────────────────────────────────────────┘
                              │
        ┌─────────────────────────────────────────────┐
        │      OUTPUT IBC CODING METRIC(S) AND         │── 2340
        │          RESIDUAL BLOCK DATA                 │
        └─────────────────────────────────────────────┘
                              │
         NO            ╱ IBC RESULT ╲         2345      YES
      ┌───────────────◄  SELECTED?   ►───────────────┐
      │               ╲             ╱                │
  2350│                                              │2355
 ┌────────────────────────┐      ┌──────────────────────────┐
 │                        │      │ ENCODE AT LEAST (I) THE IBC│
 │  ENCODE IBC BIT FIELD  │      │ BIT FIELD WITH THE SELECTED│
 │ TO INDICATE IBC NOT    │      │   IBC MODE AND (II) THE    │
 │      SELECTED          │      │  DISPLACEMENT VECTOR IN    │
 │                        │      │ ENCODED VIDEO BITSTREAM    │
 └────────────────────────┘      └──────────────────────────┘
              │                              │
              └──────────────┬───────────────┘
                    ┌─────────────────────┐
                    │        END          │
                    └─────────────────────┘
```

## FIG. 23

2400

```
                    ┌──────────────────┐
                    │      BEGIN        │
                    └──────────────────┘
                             │
                             ▼
        ┌─────────────────────────────────────┐
        │  DECODE IBC MODE AND                 │
        │  DISPLACMENT FOR CURRENT             │── 2405
        │  CODING BLOCK FROM THE ENCODED       │
        │  VIDEO BITSTREAM                     │
        └─────────────────────────────────────┘
                             │
                             ▼
        ┌─────────────────────────────────────┐
        │  SELECT A CORRESPONDING              │
        │  PREDICTOR BLOCK FOR THE CODING      │── 2410
        │  BLOCK BASED ON THE                  │
        │  DISPLACEMENT VECTOR                 │
        └─────────────────────────────────────┘
                             │
                             ▼
        ┌─────────────────────────────────────┐
        │  TRANSLATE THE PREDICTOR BLOCK       │
        │  BASED ON THE IBC MODE TO            │── 2415
        │  DETERMINE A TRANSLATED              │
        │  PREDICTOR BLOCK                     │
        └─────────────────────────────────────┘
                             │
                             ▼
        ┌─────────────────────────────────────┐
        │  DECODE THE CODING BLOCK BASED       │
        │  ON THE TRANSLATED PREDICTOR         │── 2420
        │  BLOCK                               │
        └─────────────────────────────────────┘
                             │
                             ▼
                    ┌──────────────────┐
                    │       END         │
                    └──────────────────┘
```

FIG. 24

FIG. 25

FIG. 26

FIG. 27

FIG. 28

2900

2902

Processor

2904

Motion Estimation Module

2906

Intra Block Copy Module

2908

FIG. 29

SOFTWARE
DISTRIBUTION
PLATFORM

— 3005

<u>2632</u> / <u>2732</u>

<u>3010</u>

PROCESSOR
PLATFORM(S)

2600 /
2700

<u>2632</u> / <u>2732</u>

FIG. 30

FIG. 31

EP 4 787 846 A2

**REFERENCES CITED IN THE DESCRIPTION**

**Patent documents cited in the description**

- US 62956813